# EUROPÄISCHE PATENTSCHRIFT

(11) **EP 3 715 153 B1**
(45) Veröffentlichungstag und Bekanntmachung des Hinweises auf die Patenterteilung: **11.05.2022**
(21) Anmeldenummer: 20165014.0
(22) Anmeldetag: 23.03.2020
(51) Int. Cl.: B60D 1/06, B60D 1/07, B60R 9/06, B60R 9/10

(54) **LASTENTRÄGER**
LOAD BEARER
PORTE-CHARGE

(30) Priorität: 25.03.2019 DE 102019107527
(43) Veröffentlichungstag der Anmeldung: 30.09.2020
(73) Patentinhaber: ACPS Automotive GmbH, 74379 Ingersheim (DE)
(72) Erfinder: Neumann, Peter, 71720 Oberstenfeld (DE); Gassebner, Martin, 70806 Kornwestheim (DE)
(74) Vertreter: Hoeger, Stellrecht & Partner Patentanwälte mbB

(56) Entgegenhaltungen:
- EP-A1- 2 987 662
- EP-A2- 2 361 808
- EP-A2- 2 759 421
- DE-A1-102014 002 794
- DE-A1-102014 109 134
- NL-A- 9 302 167
- US-A1- 2005 205 629

## Beschreibung

Die Erfindung betrifft einen Lastenträger für einen Kugelhals und eine von dem Kugelhals getragene Kupplungskugel aufweisende Anhängekupplungen für Kraftfahrzeuge, umfassend eine Montageeinheit, die eine auf die Kupplungskugel aufsetzbare Kupplungskugelaufnahme und eine der Kupplungskugelaufnahme zugeordnete Haltevorrichtung aufweist, welche bei auf die Kupplungskugel aufgesetzter und somit in einer Fixierposition stehender Kupplungskugelaufnahme die Kupplungskugelaufnahme mit der Kupplungskugel verbindet, und mindestens eine mit der Montageeinheit verbundene Positionierkörperaufnahme, welche bei auf die Kupplungskugel auf gesetzter Kupplungskugelaufnahme zur kippsicheren und Kippmomente aufnehmenden Abstützung der Montageeinheit an dem Kugelhals mit mindestens einem am Kugelhals fest angeordneten Positionierkörper in Wirkverbindung bringbar ist.

Derartige Lastenträger sind aus dem Stand der Technik, beispielsweise der DE 10 2014 109 134 A1, bekannt.

Bei diesen Lastenträgern besteht das Problem, dass diese lediglich dann einsetzbar sind, wenn an dem Kugelhals der mindestens eine Positionierkörper angeordnet ist, da das Zusammenwirken des Positionierkörpers mit der mindestens einen und die Kippmomente aufnehmenden Positionierkörperaufnahme der Montageeinheit zu einer kippfesten Abstützung der Montageeinheit an der Anhängekupplung führt.

Ist jedoch kein Positionierkörper vorhanden, ist die Montage eines derartigen Lastenträgers bei derartigen Anhängekupplungen ohne Positionierkörper nicht möglich.

Der Erfindung liegt daher die Aufgabe zugrunde, einen Lastenträger der gattungsgemäßen Art derart zu verbessern, dass dieser auch bei Anhängekupplungen ohne Positionierkörper einsetzbar ist.

Diese Aufgabe wird bei einem Lastenträger der eingangs beschriebenen Art erfindungsgemäß dadurch gelöst, dass die Haltevorrichtung in eine Spannstellung überführbar ist, in welcher die Kupplungskugelaufnahme mit der Haltevorrichtung an der Kupplungskugel derart kraftschlüssig festgelegt ist, dass die Montageeinheit den Lastenträger auch bei Anhängekupplungen ohne Positionierkörper allein durch den Kraftschluss an der Kupplungskugel kippfrei fixiert.

Der Vorteil dieser Lösung ist darin zu sehen, dass durch die erfindungsgemäße Ausbildung der Haltevorrichtung die Möglichkeit besteht, einen derartigen Lastenträger sowohl bei Anhängekupplungen mit Positionierkörpern als auch bei Anhängekupplungen ohne derartige Positionierkörper einzusetzen.

Bei einem derartigen Lastenträger ist es besonders vorteilhaft, wenn die Haltevorrichtung so ausgebildet ist, dass diese beim Aufsetzen der Kupplungskugelaufnahme auf die Kupplungskugel selbsttätig in eine Haltestellung übergeht, in welche die Kupplungskugelaufnahme unlösbar, jedoch verkippbar mit der Kupplungskugel verbunden ist.

Eine derartige Haltestellung der Haltevorrichtung ermöglicht es, selbst dann, wenn die Anhängekupplung nicht mit Positionierkörpern versehen ist, den Lastenträger mit der Montageeinheit auf die Kupplungskugel der Anhängekupplung aufzusetzen und durch die Haltestellung vorläufig zu fixieren, so dass dann ausgehend von der Haltestellung ein Ausrichten des Lastenträgers möglich ist und ein Übergang in die Spannstellung erfolgen kann.

Desgleichen hat eine derartige Haltestellung der Haltevorrichtung bei Lastenträgern, die bei einer Anhängekupplung mit mindestens einem Positionierkörper eingesetzt werden den Vorteil, dass damit bereits eine sichere Fixierung des Lastenträgers an der Anhängekupplung möglich ist, ohne dass es erforderlich ist, die Haltevorrichtung in die Spannstellung zu überführen.

Um beispielsweise ein Spiel zwischen der Montageeinheit und der Anhängekupplung zu vermeiden oder die Fixierung noch besser zu machen, kann die Haltevorrichtung in einem derartigen Fall in die Spannstellung überführt werden.

Hinsichtlich der Ausbildung der Haltevorrichtung wurden bislang keine näheren Angaben gemacht.

So sieht eine vorteilhafte Lösung vor, dass die Haltevorrichtung mindestens ein erstes und ein zweites Halteelement umfasst und dass die Halteelemente beim Aufsetzen der Kupplungskugelaufnahme auf die Kupplungskugel zwischen sich aufnehmen und dabei an der Kupplungskugel anlegen.

Das heißt, dass ein derart ausgebildeter Lastenträger mindestens zwei Halteelemente aufweist, es ist aber auch möglich, diesen so auszubilden, dass er weitere Halteelemente aufweist.

Wichtig ist dabei lediglich, dass die Kupplungskugelaufnahme in ihrer Fixierposition die Kupplungskugel zwischen den Halteelementen aufnimmt und sich die Halteelemente an der Kupplungskugel anlegen.

Besonders vorteilhaft ist es, wenn die Halteelemente in der Spannstellung die Kupplungskugel zwischen sich aufnehmen und zwischen sich kraftschlüssig einspannen.

Ferner ist es ebenfalls vorteilhaft, wenn die Halteelemente in der Haltestellung der Haltevorrichtung die Kupplungskugel zwischen sich aufnehmen und auf dieser gleitend anliegen.

Um die Haltevorrichtung mit den Halteelementen in die verschiedenen Stellungen bringen zu können, hat es sich als besonders vorteilhaft erwiesen, wenn die Haltevorrichtung eine mit den Halteelementen zusammenwirkende Positioniervorrichtung aufweist, mittels welcher die Halteelemente in der jeweiligen Stellung relativ zueinander positionierbar und fixierbar sind.

Eine derartige Positioniervorrichtung kann dabei in unterschiedlichster Art und Weise ausgebildet sein.

Eine erste Möglichkeit sieht vor, dass die Positioniervorrichtung so ausgebildet ist, dass die Halteelemente mit dieser vor dem Aufsetzen der Kupplungskugelaufnahme in einer Bereitschaftsstellung positionierbar sind.

Eine derartige Bereitschaftsstellung der Halteelemente schafft die Möglichkeit, die Kupplungskugelaufnahme mitsamt den Halteelementen in einfacher Weise auf die Kupplungskugel aufzusetzen.

Ferner sieht eine vorteilhafte Lösung vor, dass das Anlegen der Halteelemente an der Kupplungskugel beim Aufsetzen der Kupplungskugelaufnahme auf die Kupplungskugel ein Aufheben der Bereitschaftsstellung erfolgt.

Das heißt, dass die Halteelemente vor dem Aufsetzen der Haltevorrichtung auf die Kupplungskugel in eine Bereitschaftsstellung gebracht werden, diese Bereitschaftsstellung aber dann beim Aufsetzen der Halteelemente auf die Kupplungskugel und insbesondere der Berührung der Halteelemente mit der Kupplungskugel, die Halteelemente nicht mehr in der Bereitschaftsstellung stehen, sondern diese Bereitschaftsstellung aufgehoben wird.

Das Aufheben der Bereitschaftsstellung könnte dabei in unterschiedlichster Art und Weise erfolgen, beispielsweise dadurch, dass ein Tastelement der Positioniervorrichtung mit der Kupplungskugel in Berührung kommt.

Besonders günstig ist es jedoch, dass das Aufheben der Bereitschaftsstellung dadurch erfolgt, dass die Halteelemente bei Kontakt mit der Kupplungskugel von einander weg, das heißt auseinander, bewegt werden, nämlich dadurch, dass die Kupplungskugel bei diesem Vorgang zwischen die Halteelemente bewegt wird.

Eine zweckmäßige Lösung hierzu sieht vor, dass die Positioniervorrichtung so ausgebildet ist, dass durch das Aufheben der Bereitschaftsstellung beim Aufsetzen der Kupplungskugelaufnahme auf die Kupplungskugel die Positioniervorrichtung in der auf die Kupplungskugel aufgesetzten Stellung der Kupplungskugelaufnahme die Halteelemente in die Haltestellung überführen und in dieser fixieren kann.

Dies könnte beispielsweise durch manuelle Einwirkung erfolgen.

Eine vorteilhafte Lösung sieht vor, dass die Positioniervorrichtung die Halteelemente selbsttätig in die Haltestellung überführt und selbsttätig in dieser hält.

Das heißt, dass beim Aufsetzen der Montageeinheit und bei Übergang der Haltevorrichtung von der Bereitschaftsstellung in die Haltestellung die Positioniervorrichtung dazu führt, dass die Halteelemente selbsttätig in die Haltestellung überführt werden und auch dazu, dass die Halteelemente selbsttätig in der Haltestellung gehalten, insbesondere dauerhaft fixiert werden.

Darüber hinaus sieht eine weitere vorteilhafte Lösung vor, dass mit der Positioniervorrichtung die Halteelemente in die die Kupplungskugel kraftschlüssig festlegende Spannstellung überführbar sind, das heißt, dass die Positioniervorrichtung nicht nur dazu dient, die Halteelemente in die Haltestellung zu überführen, sondern auch gleichzeitig dazu eingesetzt werden kann, um die Halteelemente in die Spannstellung zu überführen.

Insbesondere ist es vorteilhaft, wenn die Positioniervorrichtung so ausgebildet ist, dass die Halteelemente von der Haltestellung ausgehend in die Spannstellung überführbar sind.

Das heißt, dass die Positioniervorrichtung beim Aufsetzen der Kupplungskugelaufnahme auf die Kupplungskugel dafür Sorge trägt, dass die Halteelemente zunächst in die Haltestellung übergehen und dass dann ausgehend von der Haltestellung mittels der Positioniervorrichtung ein Übergang der Halteelemente in die Spannstellung erfolgt.

Besonders günstig ist es, wenn die Positioniervorrichtung so ausgebildet ist, dass die Halteelemente durch manuelle Einwirkung auf ein Betätigungselement der Positioniervorrichtung in die Spannstellung überführt werden.

Hinsichtlich der Ausbildung der Positioniervorrichtung wurden im Zusammenhang mit der bisherigen Erläuterung der einzelnen Ausführungsformen keine näheren Angaben gemacht.

So sieht eine vorteilhafte Lösung vor, dass die Positioniervorrichtung zur Bewegung der Halteelemente in die jeweiligen Stellungen relativ zueinander mit einem Kniehebelmechanismus versehen ist.

Ein derartiger Kniehebelmechanismus hat zum Einen den Vorteil, dass dieser einfach aufgebaut ist und zum anderen den Vorteil, dass sich mit diesem, insbesondere beim Übergang in die Spannstellung, die für die kraftschlüssige Fixierung der Kupplungskugel durch die Haltevorrichtung erforderlichen hohen Spannkräfte in einfacher Weise erzielen lassen.

Insbesondere ist dabei der Kniehebelmechanismus so ausgebildet, dass dieser in einer ersten Knickstellung die Halteelemente in der Bereitschaftsstellung hält und dass der Kniehebelmechanismus in einer zweiten Knickstellung die Halteelemente in der Haltestellung hält.

Dabei könnten grundsätzlich die Knickstellungen identisch sein.

Eine günstige Lösung sieht vor, dass der Kniehebelmechanismus in der zweiten Knickstellung einen kleineren Winkel einschließt als in der ersten Knickstellung.

Ferner ist zweckmäßigerweise vorgesehen, dass der Kniehebelmechanismus in eine Übertotpunktstellung bewegbar ist, in welcher dieser die Halteelemente in der Spannstellung hält.

Eine derartige Übertotpunktstellung des Kniehebelmechanismus ist ein besonderer Vorteil desselben, da sich kurz unmittelbar vor dem Übergang in den Totpunkt und auch in der Übertotpunktstellung in einfacher Weise bei geringen Betätigungskräften hohe Spannkräfte erzielen lassen.

Um den selbsttätigen Übergang in die Haltestellung zu erreichen ist vorzugsweise vorgesehen, dass der Kniehebelmechanismus durch ein federelastisches Element ständig in Richtung einer Bewegung der Halteelemente in die Haltestellung beaufschlagt ist.

Um den Kniehebelmechanismus in den verschiedenen Stellungen fixieren zu können, ist vorzugsweise vorgesehen, dass die Positioniereinrichtung eine dem Kniehebelmechanismus zugeordnete Kulissenführung umfasst, die in der Lage ist, den Kniehebelmechanismus in der Bereitschaftsstellung und in der Haltestellung zu halten.

Darüber hinaus sieht eine weitere vorteilhafte Lösung vor, dass die Kulissenführung einen eine Kulissenbahn tragenden Kulissenträger aufweist und dass die Kulissenbahn mit einem mit dem Kniehebelmechanismus gekoppelten Bahnfolger zusammenwirkt.

Eine derartige Kombination von Kulissenbahn und Bahnfolger ermöglicht es in einfacher Weise, die verschiedenen Stellungen vorzugeben und den Kniehebelmechanismus in diesen Stellungen zu fixieren.

Hinsichtlich der Anordnung des Kulissenträgers wurden bislang keine näheren Angaben gemacht.

So sieht eine vorteilhafte Lösung vor, dass der Kulissenträger an einem Träger für die Halteelemente bewegbar angeordnet ist.

Ferner ist vorzugsweise vorgesehen, dass der Kulissenträger durch ein federelastisches Element in Richtung einer die Halteelemente mit dem Kniehebelmechanismus in der Haltestellung fixierenden Stellung beaufschlagt ist.

Das heißt, dass der Kulissenträger stets das Bestreben hat in die Stellung überzugehen, in welcher er die Halteelemente in die Haltestellung überführt und in dieser fixiert.

Ferner ist vorzugsweise vorgesehen, dass der Kulissenträger durch manuelle Einwirkung gegen die Kraftwirkung des federelastischen Elements in eine die Halteelemente mit dem Kniehebelmechanismus in der Bereitschaftsstellung haltende Stellung überführbar sind.

Vorzugsweise ist dabei die Kulissenbahn so ausgebildet, dass sie sowohl für die Bereitschaftsstellung als auch für die Haltestellung Bahnfolgeraufnahmen aufweist, in welchen die Kulissenbahn eine selbsttätige Bewegung des Bahnfolgers in eine andere Stellung verhindert.

Beispielsweise sind dabei die Bahnfolgeraufnahmen so ausgebildet, dass in der Bereitschaftsstellung ein Auseinanderbewegen der Halteelemente dazu führt, dass der Bahnfolger die Bahnfolgeraufnahme für die Bereitschaftsstellung verlässt und somit die Bereitschaftsstellung aufgehoben wird.

Ferner ist beispielsweise die Bahnfolgeraufnahme für die Haltestellung so ausgebildet, dass sie den Bahnfolger daran hindert, die Haltestellung zu verlassen und somit ein Auseinanderbewegen der Halteelemente verhindert, so dass dadurch die Haltestellung zwangsläufig fixiert wird.

Darüber hinaus ist die Bahnfolgeraufnahme in der Haltestellung aber auch so ausgebildet, dass sie es zulässt, dass der Bahnfolger die Haltestellung verlässt und zwar in Richtung einer Stellung, in welcher die Halteelemente die Kupplungskugel mit der erforderlichen Spannkraft beaufschlagen.

Im Zusammenhang mit der bisherigen Beschreibung der erfindungsgemäßen Positionierkörperaufnahme wurde lediglich das Vorhandensein mindestens einer Positionierkörperaufnahme definiert.

Besonders vorteilhaft ist es dabei, wenn die Montageeinheit zwei Positionierkörperaufnahmen aufweist, die aufeinander gegenüberliegenden Seiten der Kupplungskugelaufnahme angeordnet sind.

Derartige Positionierkörperaufnahmen wirken besonders vorteilhaft mit Positionierkörpern zusammen, die auf einander gegenüberliegenden Seiten des Kugelhalses angeordnet sind.

Ferner sind vorteilhafterweise die Positionierkörperaufnahmen so angeordnet, dass sie außerhalb der Kupplungskugelaufnahme liegen, so dass die Kupplungskugel zwischen den Positionierkörperaufnahmen hindurch in die Kupplungskugelaufnahme hinein bewegt werden kann, wenn ein Aufsetzen der Montageeinheit auf die Anhängekupplung erfolgt.

Darüber hinaus ist vorteilhafterweise vorgesehen, dass die Positionierkörperaufnahmen so ausgebildet sind, dass sie die Positionierkörper so weit aufnehmen, dass die Positionierkörperaufnahmen auf einander gegenüberliegenden Seiten des jeweiligen Positionierkörpers anliegen und somit eine Kippsicherung für die Montageeinheit darstellen, wenn die Montageeinheit mittels der Halteeinheit in der Haltestellung an der Kupplungskugel fixiert ist, jedoch in der Haltestellung die Montageeinheit noch Kippbewegungen relativ zur Kupplungskugel ausführen kann.

Ferner ist vorzugsweise vorgesehen, dass die Positionierkörperaufnahmen auch an den Positionierkörpern auf deren dem Kugelhals abgewandten Stirnseiten anliegen.

Insbesondere sind bei der erfindungsgemäßen Lösung die Positionierkörperaufnahmen so ausgebildet, dass sie eine umgekehrt U-förmige Kontur aufweisen, mit welcher diese beim Aufsetzen der Montageeinheit auf die Anhängekupplung die Positionierkörper auf einander gegenüberliegenden Seiten übergreifen und dabei an den Positionierflächen der Positionierkörper, die quer zu einer Längsmittelebene des Kugelhalses verlaufen, anliegen.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Seitenansicht eines Kraftfahrzeugs mit einer Anhängekupplung und einem an der Anhängekupplung montierten Lastenträgers;
- Fig. 2: eine vergrößerte Darstellung der Seitenansicht gemäß Fig. 1 eines Kugelhalses mit einer an diesem gehaltenen Montageeinheit des Lastenträgers;
- Fig. 3: eine Ansicht des Kugelhalses in Richtung eines Pfeils A in Fig. 1;
- Fig. 4: eine Ansicht ähnlich Fig. 2 vor einem Aufsetzen der Montageeinheit auf die Kupplungskugel und den Kugelhals;
- Fig. 5: eine perspektivische Darstellung einer Montageeinheit eines erfindungsgemäßen Lastenträgers;
- Fig. 6: eine Draufsicht in Richtung des Pfeils B auf die Montageeinheit gemäß Fig. 5;
- Fig. 7: eine perspektivische Darstellung der erfindungsgemäßen Montageeinheit mit Blick in die Kupplungskugelaufnahme und Blick auf ein erstes Halteelement mit einer Kugelaufnahmefläche;
- Fig. 8: eine perspektivische Darstellung der Montageeinheit mit Blick in die Kupplungskugelaufnahme und auf ein zweites Halteelement;
- Fig. 9: einen Schnitt längs Linie 9-9 in Fig. 6 und einer in einer Bereitschaftsstellung stehenden Haltevorrichtung;
- Fig. 10: eine Ansicht der Montageeinheit mit Blick in Richtung des Pfeils C in Fig. 6 und in der Bereitschaftsstellung der Haltevorrichtung mit den Halteelementen;
- Fig. 11: einen Schnitt ähnlich Fig. 9 beim Aufsetzen der Kupplungskugelaufnahme auf die Kupplungskugel der Anhängekupplung wobei die Halteelemente an der Kupplungskugel anliegen;
- Fig. 12: eine Ansicht der Montageeinheit ähnlich Fig. 10 in einer Stellung entsprechend Fig. 11;
- Fig. 13: einen Schnitt ähnlich Fig. 9 in einer Haltestellung der Haltevorrichtung;
- Fig. 14: eine Ansicht ähnlich Fig. 10 in der Haltestellung gemäß Fig. 13;
- Fig. 15: einen Schnitt ähnlich Fig. 9 in einer Spannstellung der Haltevorrichtung;
- Fig. 16: eine Ansicht ähnlich Fig. 10 in der Spannstellung gemäß Fig. 15;
- Fig. 17: einen Schnitt ähnlich Fig. 9 bei auf der Kupplungskugel aufgesetzter Kupplungskugelaufnahme in der Bereitschaftsstellung der Haltevorrichtung vor einem Abheben der Montageeinheit von der Kupplungskugel;
- Fig. 18: eine Ansicht der Montageeinheit ähnlich Fig. 10 in der Bereitschaftsstellung gemäß Fig. 17;
- Fig. 19: einen Schnitt ähnlich Fig. 9 durch die Montageeinheit in der Spannstellung allerdings bei einer Anhängekupplung ohne Positionierkörper und
- Fig. 20: eine Ansicht der Montageeinheit ähnlich Fig. 10 in der Spannstellung gemäß Fig. 19 bei einem Kugelhals ohne Positionierkörper.

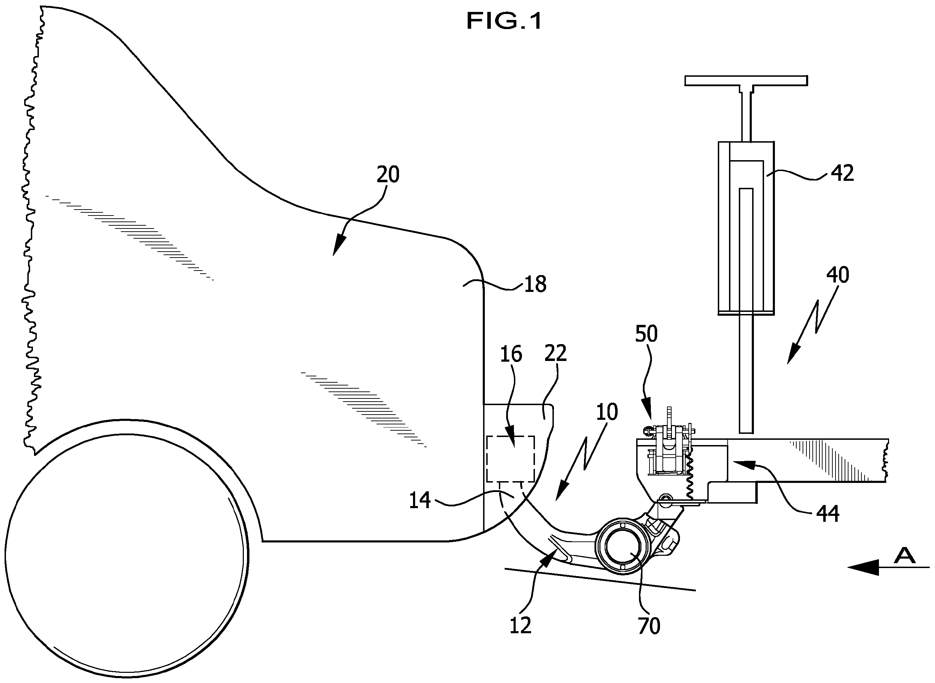

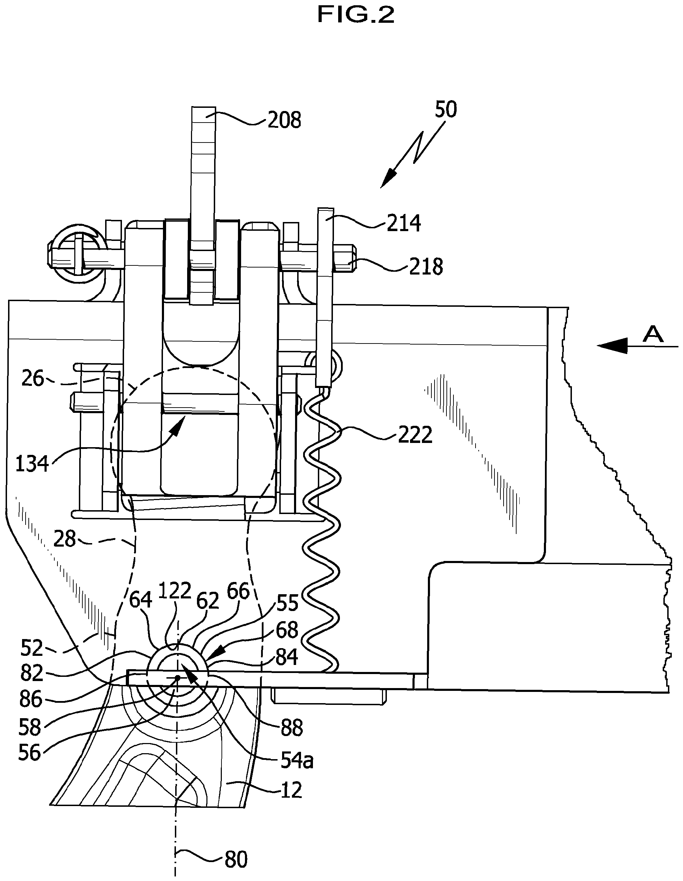

Ein in Fig. 1 und 2 dargestelltes Ausführungsbeispiel einer als Ganzes mit 10 bezeichneten Anhängekupplung umfasst einen Kugelhals 12, welcher an einem ersten Ende 14 mit einem Kugelhalsträger 16 verbunden ist, welcher seinerseits fest an einer Heckpartie 18 einer als Ganzes mit 20 bezeichneten Kraftfahrzeugkarosserie eines Kraftfahrzeugs gehalten ist, wobei der Kugelhalsträger 16 vorzugsweise verdeckt durch eine hintere Stoßfängereinheit 22 fest mit der Heckpartie 18 verbunden ist.

Der Kugelhalsträger 16 umfasst beispielsweise einen üblichen sich unter der Stoßfängereinheit 22 und parallel zu dieser sowie quer zu einer Längsrichtung der Kraftfahrzeugkarosserie 20 erstreckenden Querträger, welcher seinerseits mit der Heckpartie 18 verbunden ist, und außerdem entweder eine Aufnahme, an welcher Kugelhals 12 mit dem Ende 14 fest oder lösbar gehalten ist, oder ein Schwenklager, mit welchem der Kugelhals 12 um eine oder mehrere Achsen relativ zu der Heckpartie 18 zwischen einer Arbeitsstellung, dargestellt in Fig. 1, und einer nicht dargestellten Ruhestellung verschwenkbar ist, wobei der Kugelhals 12 sich in der Ruhestellung ungefähr parallel zur Stoßfängereinheit 22 erstreckt und von der hinteren Stoßfängereinheit 22 weitgehend verdeckt zwischen dieser und der Heckpartie 18 der Kraftfahrzeugkarosserie 20 angeordnet ist.

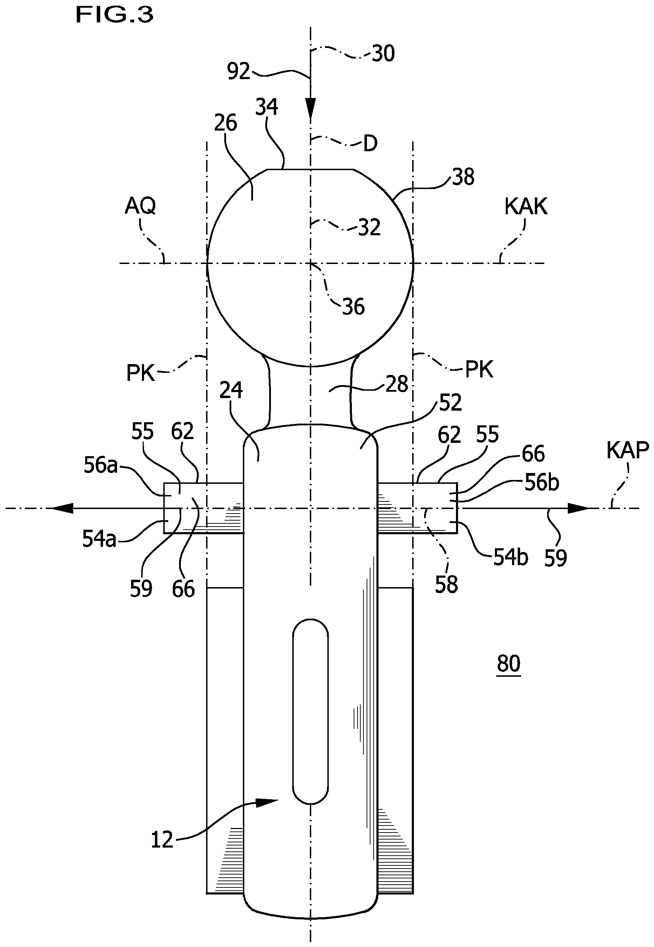

Wie in Fig. 2 und Fig. 3 dargestellt, ist der Kugelhals 12 zwischen seinem ersten Ende 14 und dem diesem gegenüberliegenden zweiten Ende 24 abgekröpft, so dass das Ende 24 sich in der Arbeitsstellung von einer Fahrbahn weg erstreckt, und trägt an dem Ende 24 eine als Ganzes mit 26 bezeichnete Kupplungskugel, wobei zwischen der Kupplungskugel 26 und dem Ende 24 eine als Kugelansatz 28 bezeichnete Einschnürung vorgesehen ist, welche sich an das Ende 24 in Fortsetzung eines Verlaufs des Kugelhalses 12 anschließt und über welche die Kupplungskugel 26 mit dem zweiten Ende 24 des Kugelhalses 12 verbunden ist.

Die Kupplungskugel 26 dient dabei üblicherweise zum Anhängen eines Anhängers, wobei ein Anhänger eine Zugkugelkupplung aufweist, welche die Kupplungskugel 24 übergreifend mit dem Kugelhals 12 verbindbar ist.

In seiner Arbeitsstellung, dargestellt in Fig. 1, 2 und 3, ist der Kugelhals 12 zumindest im Bereich des Kugelansatzes 28 und des diesen tragenden Endes 24 symmetrisch zu einer vertikalen Längsmittelebene 30 ausgebildet, in gleicher Weise wie auch die Kupplungskugel 26, wobei die Längsmittelebene 30 nicht nur die Längsmittelebene 30 des Kugelhalses 12 und der Anhängekupplung 10 ist, sondern in der Arbeitsstellung der Anhängekupplung 10 auch mit der vertikalen Längsmittelebene 30 der Heckpartie 18 und der Kraftfahrzeugkarosserie 20 zusammenfällt.

Dabei liegt insbesondere eine Mittelachse 32 der Kupplungskugel 26 in der vertikalen Längsmittelebene 30, wobei die Mittelachse 32 der Kupplungskugel 26 dadurch festgelegt ist, dass sie gleichzeitig eine Mittelachse 32 des Kugelansatzes 28 darstellt und/oder insbesondere außerdem dadurch festgelegt ist, dass sie mittig und senkrecht zu einer Abflachung 34 der Kupplungskugel 26 verläuft, welche an der Kupplungskugel 26 auf einer dem Kugelansatz 28 gegenüberliegenden Seite vorgesehen ist, so dass die Form der Kupplungskugel 26 einerseits im Bereich des Kugelansatzes 28 und andererseits im Bereich der Abflachung 34 von einer um einen auf der Mittelachse 32 liegenden Kugelmittelpunkt 36 verlaufenden vollständigen Kugelfläche 38 abweicht.

Wie in Fig. 1 und 2 dargestellt, kann die Anhängekupplung 10 nicht nur dazu dienen, einen Anhänger mit der Kraftfahrzeugkarosserie 20 zu verbinden, sondern auch dazu, einen als Ganzes mit 40 bezeichneten Lastenträger an der Kraftfahrzeugkarosserie 20 zu fixieren.

Der Lastenträger 40 dient dabei beispielsweise dazu, Fahrräder 42 zu transportieren, es ist aber auch denkbar, mit dem Lastenträger 40 andere Lasten beliebiger Art zu transportieren.

Der Lastenträger 40 umfasst eine Lastenträgerbasis 44, beispielsweise ausgebildet in Form eines Grundrahmens zur Aufnahme der verschiedenen Lasten, welcher mit einer Montageeinheit 50 versehen ist, mit welcher der Lastenträger 40 an dem Kugelhals 12 festlegbar ist.

Wie in den Fig. 2 und 3 dargestellt, ist bei einem dargestellten Ausführungsbeispiel der Kugelhals 12 in einem unmittelbar an das Ende 24 und den Kugelansatz 28 angrenzenden Kugelhalsabschnitt 52 mit über diesen seitlich überstehenden Positionierkörpern 54a und 54b versehen, welche beispielsweise durch an den Kugelhalsabschnitt 52 angeformte und seitlich über den Kugelhalsabschnitt 52 überstehende massive Zapfen 56a, 56b, insbesondere mit einer zylindrischen Mantelfläche, ausgebildet sind.

In dem Fall, in dem der Kugelhals 12 mit einer Aufnahme 70 für eine Steckdose versehen ist, liegt der Kugelhalsabschnitt 52 zwischen der Aufnahme 70 und dem Ende 24.

Ferner erstreckt sich der Kugelhalsabschnitt 52 vorzugsweise ausgehend von dem Ende 24 entlang des Kugelhalses 12 maximal über eine Distanz die einem 1,5-fachen des Durchmessers der Kugelfläche 38 der Kupplungskugel 26 entspricht.

Vorzugsweise erstreckt sich der Kugelhalsabschnitt 52 ausgehend von dem Ende 24 lediglich über eine Distanz, die dem Durchmesser der Kugelfläche 38 entspricht.

Dabei sind die massiven Zapfen 56a und 56b symmetrisch zu der Längsmittelebene 30, angeordnet und erstrecken sich ausgehend von dem Kugelhalsabschnitt auch symmetrisch zu der vertikalen Längsmittelebene 30.

Alternativ zum Anformen der Positionierkörper 54 an den Kugelhalsabschnitts 52 besteht aber auch die Möglichkeit, die Positionierkörper 54 durch einen den Kugelhalsabschnitt 52 in einer Bohrung durchsetzenden Stift, beispielsweise mit einer zylindrischen Mantelfläche, zu realisieren, welcher mit seinen beiden Enden dann die Zapfen 56a, b bildet.

Vorzugsweise sind die Positionierkörper 54, insbesondere die Zapfen 56, so ausgebildet, dass die Form der Positionierkörper 54a und 54b jeweils spiegelsymmetrisch zur Längsmittelebene 30 gestaltet ist.

Wie insbesondere in Fig. 3 dargestellt, erstrecken sich die Positionierkörper 54a und 54b mit ihrer Längsachse 58 in einer Erstreckungsrichtung 59, die quer, vorzugsweise senkrecht, zur Längsmittelebene 30 verläuft.

Die Längsachse 58 liegt beispielsweise in einer sich quer, vorzugsweise senkrecht zur Längsmittelebene 30 erstreckenden insbesondere Querebene 80, die beispielsweise außerdem parallel zur Mittelachse 32 der Kupplungskugel 26 verläuft, insbesondere durch die Mittelachse 32 der Kupplungskugel 26 hindurch verläuft.

Die Positionierkörper 54 umfassen beiderseits auf einer Außenseite 55 derselben liegende erste Positionierflächen 64, 66, die parallel zur Längsachse 58 und zur Erstreckungsrichtung 59 verlaufen.

Insbesondere erstrecken sich die ersten Positionierflächen 64, 66 ausgehend von einer auf der Außenseite 55 liegenden und der Kupplungskugel 26 zugewandten Scheitellinie 62.

Die Scheitellinie 62 liegt dabei insbesondere in der Querebene 80, welche einerseits durch die Kupplungskugel 26 verläuft und andererseits die Positionierkörper 54a und 54b, insbesondere mittig, schneidet, wie in Fig. 3 dargestellt.

Auf gegenüberliegenden Seiten der Querebene 80 liegen die ersten Positionierflächen 64 und 66 der Positionierkörper 54a und 54b, die sich vorzugsweise parallel oder ein einem Winkel von bis zu 20° zu der Längsachse 58 der Positionierkörper 54a, 54b erstrecken, wobei die Positionierflächen 64 und 66 Teilflächen einer als Ganzes mit 68 bezeichneten geometrischen Außenmantelfläche der Positionierkörper 54a und 54b sind, welche den Kugelhalsabschnitt 52 schneidet.

Im Fall der Ausbildung der Positionierkörper 54a und 54b in Form zylindrischer Zapfen stellt die Außenmantelfläche 68 der Positionierkörper 54a und 54b eine Zylindermantelfläche dar, wobei die Längsachse 58 eine Zylinderachse zu dieser Zylindermantelfläche 68 bildet.

Die Positionierflächen 64 und 66 erstrecken dabei ausgehend von der Scheitellinie 62 beiderseits vorzugsweise in zunehmendem Abstand von der insbesondere vertikalen Querebene 80, wobei die Positionierflächen 64 und 66 sich zunächst quer zur Querebene 80 und auch quer zur Längsmittelebene 30 und sich mit zunehmendem Abstand von der Kupplungskugel 26 auch mit zunehmendem Abstand von der Querebene 80 verlaufende Positionierflächenbereiche 82 und 84 aufweisen, die in näherungsweise parallel oder parallel zu der Querebene 80 verlaufende Führungsflächenbereiche 86, 88 der ersten Positionierflächen 64 und 66 übergehen.

Dabei gehen die Positionierflächenbereiche 82 und 84 beispielsweise stufenlos in die Führungsflächenbereiche 86 bzw. 88 über.

Bei dem in den Fig. 2 bis 3 dargestellten Ausführungsbeispiel des erfindungsgemäßen Kugelhalses 12 liegen die Positionierkörper 54a und 54b derart nahe an dem Kugelansatz 28, dass ein Abstand der Scheitellinie 62 der Positionierkörper 54a, b von dem Ende 24 des Kugelhalses 12, an welchem der Kugelansatz 28 beginnt, kleiner ist als das 1,5-fache der Ausdehnung des Kugelansatzes 28 zwischen dem zweiten Ende 24 und der Kupplungskugel 26.

Ferner ist insbesondere der Abstand der Positionierkörper 54a und 54b von einer durch den Kugelmittelpunkt 36 und senkrecht zur Mittelachse 32 verlaufenden Äquatorebene AQ der Kupplungskugel 26 kleiner als der 1,5-fache Durchmesser der Kugelfläche 38 der Kupplungskugel 26.

Insbesondere liegen die ersten Positionierflächen 64, 66 mit den Positionierflächenbereichen 82, 84 und den Führungsflächenbereichen 86, 88 außerhalb einer Projektionskontur PK, das heißt auf einer dem Kugelhalsabschnitt 52 abgewandten Seite der Projektionskontur PK, die durch Projektion der Kupplungskugel 26 auf den Positionierkörper 54, insbesondere dessen Außenfläche 55 entsteht.

Somit liegt insbesondere der Kugelhalsabschnitt 52, der die Positionierkörper 54a, 54b trägt, innerhalb der Projektionskontur PK, und die Positionierkörper 54a, 54b erstrecken sich von diesem Kugelhalsabschnitt 52 ausgehend bis zu den ersten Positionierflächen 64, 66.

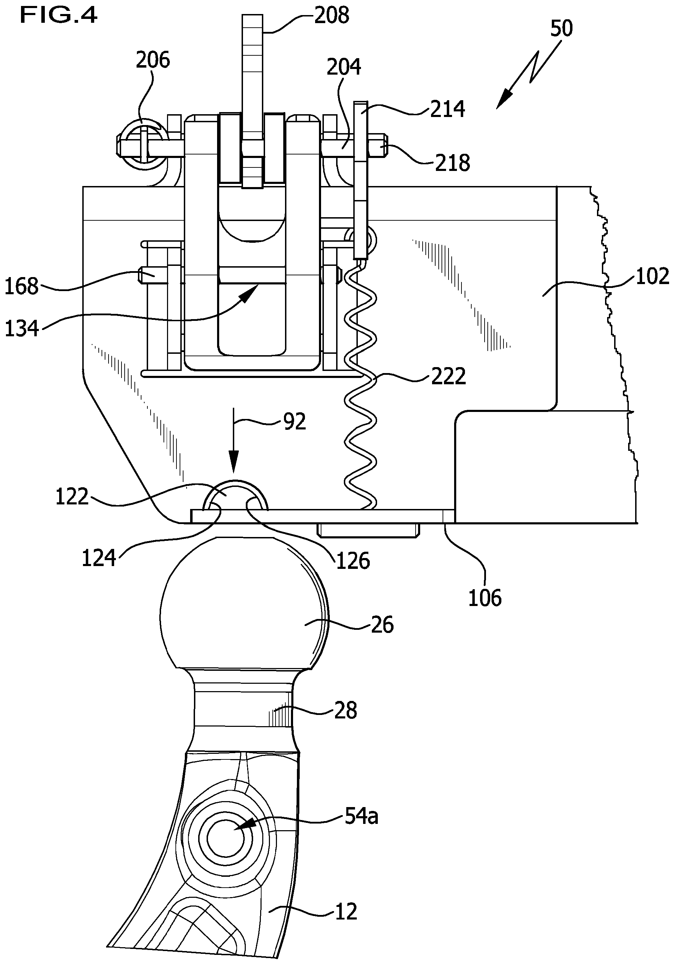

Dabei erfolgt die Projektion parallel zu einer Aufsetzrichtung 92, in welcher die Montageeinheit 50 auf die Kupplungskugel 26 und den Kugelhals 12 aufsetzbar ist (Fig. 4).

Die Aufsetzrichtung 92 verläuft vorzugsweise ungefähr parallel, insbesondere parallel zur Mittelachse 32.

Unter ungefähr parallel ist dabei zu verstehen, dass der Winkel zwischen der Aufsetzrichtung 92 und der Mittelachse 32 maximal 10° beträgt.

Auf den vorstehend beschriebenen Kugelhals 12, welcher an dem zweiten Ende 24 die Kupplungskugel 26 und im nahe dem zweiten Ende 24 liegenden Kugelhalsabschnitt 52 die Positionierkörper 54a und 54b trägt, ist die Montageeinheit 50 aufsetzbar, wobei das Aufsetzen der Montageeinheit 50 in der Aufsetzrichtung 92 erfolgt, welche insbesondere parallel zur Längsmittelebene 30 und ungefähr parallel zur Mittelachse 32 verläuft.

Unter dem ungefähr parallelem Verlauf der Aufsetzrichtung 92 ist zu verstehen, dass ein maximaler Winkel zwischen der Mittelachse 32 der Kupplungskugel 26 und der Aufsetzrichtung 92 weniger als 30° betragen soll, so dass die Aufsetzrichtung parallel und/oder schräg zur Mittelachse 32 oder auch gekrümmt verlaufen kann.

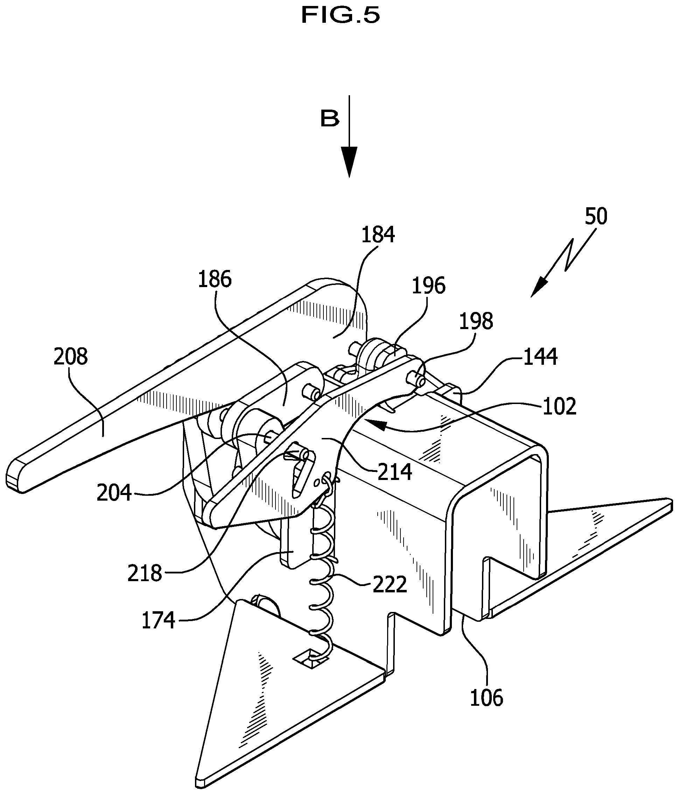

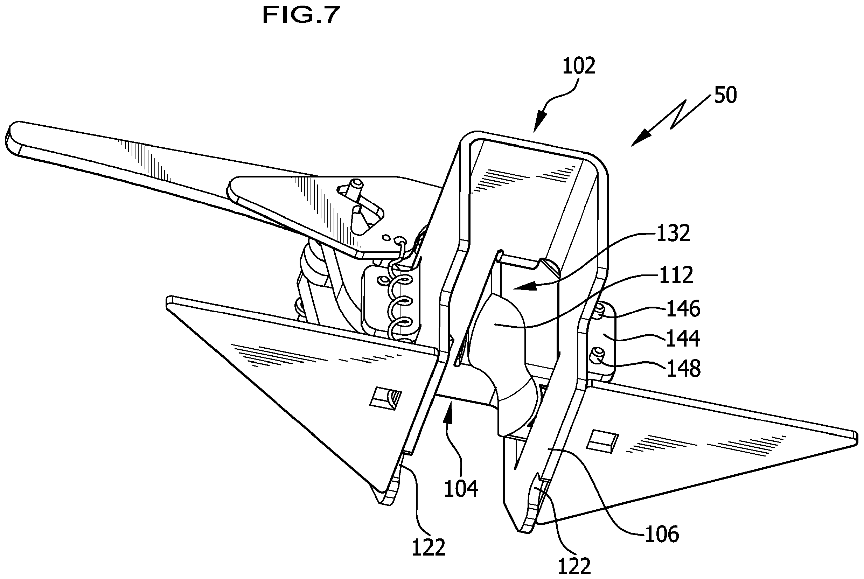

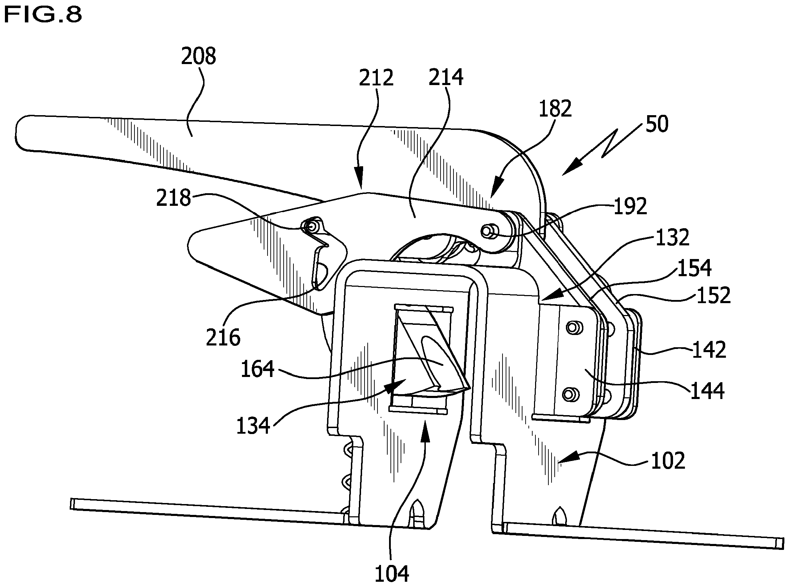

Die Montageeinheit 50 weist ihrerseits ein Gehäuse 102 Kupplungskugelaufnahme 104 für die Kupplungskugel 26 auf, wobei die Kupplungskugelaufnahme 104 ausgehend von einer Aufnahmeöffnung 106 des Gehäuse 102 eine in dem Gehäuse 102 liegende Kugelaufnahmefläche 112 umfasst (Fig. 4 bis Fig. 8).

Die Montageeinheit 50 ist außerdem mit Positionierkörperaufnahmen 122 versehen, die so ausgebildet sind, dass sie bei auf die Kupplungskugel 26 aufgesetzter Kupplungskugelaufnahme 104 und an der Kugelaufnahmefläche 112 anliegender Kupplungskugel 26, mit jeweils einem der Positionierkörper 54 so zusammenwirken, dass die Positionierkörper 54 an diesen Positionierkörperaufnahmen 122 mit Bereichen der Positionierflächen 64, 66, insbesondere mit den Positionierflächenbereichen 82, 84 und/oder mit den Führungsflächenbereichen 86, 88 anliegen.

Beispielsweise haben die Positionierkörperaufnahmen 122 nicht ganz parallel sondern geringfügige V-förmig zueinander verlaufende Seitenflächen 124, 126, die auf die Positionierflächenbereiche 82, 84 spielfrei aufsetzbar sind (Fig. 4).

Insbesondere sind die Positionierkörperaufnahmen 122 fest mit dem Gehäuse 102 verbunden wobei im einfachsten Fall das Gehäuse 102 seinerseits sich bis zu den Positionierkörperaufnahmen 122 erstreckt und selbst mit diesen Positionierkörperaufnahmen 122 versehen ist.

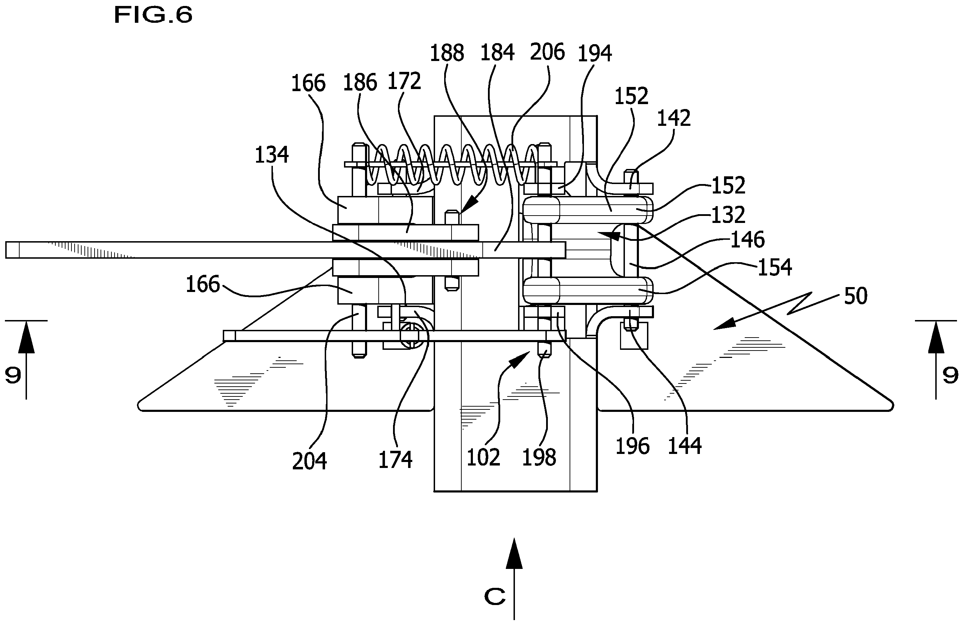

Zur Fixierung der Kugelaufnahme 104 an der Kupplungskugel 26 ist die Montageeinheit 50, insbesondere das Gehäuse 102, wie insbesondere in den Fig. 6 bis 9 zu erkennen, mit einer Haltevorrichtung 130, umfassend insbesondere zwei Halteelementen 132, 134, versehen, wobei das Halteelement 132 stationär an dem Gehäuse 102 gehalten ist und die Kugelaufnahmefläche 112 trägt.

Beispielsweise ist das Halteelement 132 zwischen zwei an dem Gehäuse 102 angeordneten Flanschen 142, 144 angeordnet und insbesondere durch Bolzen 146, 148 mit diesen verbunden, wobei die Bolzen 146, 148 sowohl die Flansche 142 und 144 als auch an dem Halteelement 132 vorgesehene Rippen 152, 154 des ersten Halteelements 132 durchsetzen und dadurch dieses relativ zum Gehäuse 102 fixieren (Fig. 6 bis 9).

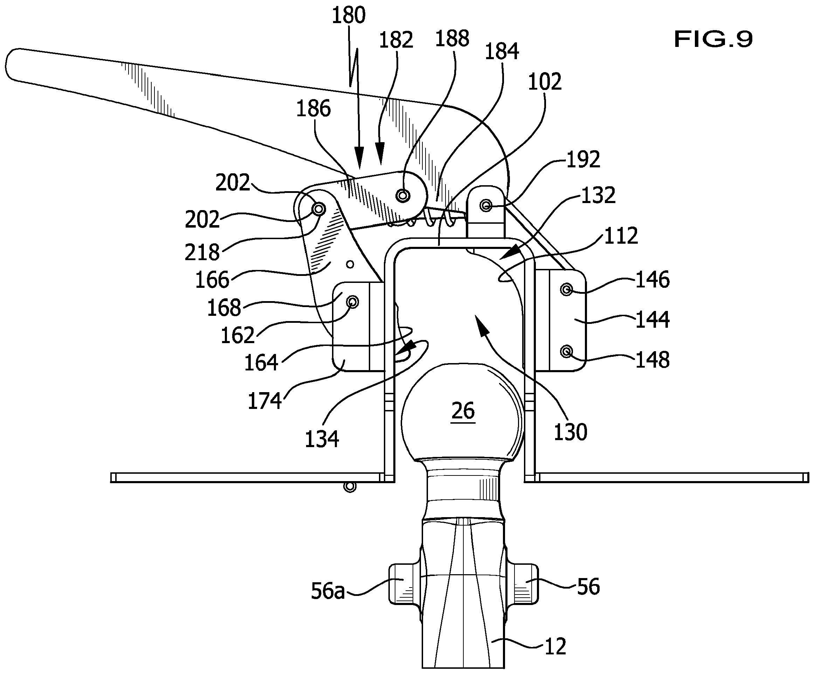

Wie insbesondere in Fig. 9 erkennbar, ist das erste Halteelement 132 ferner so in dem Gehäuse 102 angeordnet, dass dessen Kugelaufnahmefläche 112 im Wesentlichen auf einer Seite der Kupplungskugel 26 anlegbar ist, wobei die Kugelaufnahmefläche 112 insbesondere die Form eines halbseitigen Kugelkappenbereichs zur Aufnahme der Kupplungskugel 26 aufweist, so dass die Kugelaufnahmefläche 112 in der Lage ist, die Kupplungskugel 26 so aufzunehmen, dass sie durch die Kugelaufnahmefläche 112 gegen translatorische Bewegungen in alle in der Kugelaufnahmefläche 112 liegenden Richtungen fixierbar ist.

Das zweite Halteelement 134 ist, wie ebenfalls in den Fig. 6 bis 9 dargestellt, an dem Gehäuse 102 um eine Schwenkachse 162 verschwenkbar gelagert, wobei eine Kugelaufnahmefläche 164 auf einer Seite der Schwenkachse 162 liegt, während sich auf einer der Kugelaufnahmefläche 164 gegenüberliegenden Seite der Schwenkachse 162 ein an dem zweiten Halteelement 134 angeordneter gabelartig ausgebildeter Betätigungsarm 166 von der Schwenkachse 162 weg erstreckt.

Insbesondere wird die Schwenkachse 162 gebildet durch einen Lagerbolzen 168, welcher zwei an dem Gehäuse 102 angeformte Flansche 172, 174 und außerdem das Halteelement 134 selbst durchsetzt (Fig. 6 bis 9).

Durch Verschwenken des zweiten Halteelements 134 um die Schwenkachse 162 ist die Kugelaufnahmefläche 164 desselben auf die Kugelaufnahmefläche 112 des ersten Halteelements 132 zu oder von dieser weg bewegbar, um einerseits die Kupplungskugel 26 - wie nachfolgend im Detail beschrieben - zwischen den Kugelaufnahmeflächen 112 und 164 aufnehmen oder - wie ebenfalls nachfolgend im Detail beschrieben - freigeben zu können.

Das Verschwenken des zweiten Halteelements 134 erfolgt durch eine als Ganzes mit 180 bezeichnete Positioniervorrichtung umfassend einen mit 182 bezeichneten Kniehebelmechanismus, welcher einen ersten Kniehebelarm 184 und einen zweiten Kniehebelarm 186 umfasst, die durch ein Gelenk 188 miteinander verbunden sind.

Ferner ist der erste Kniehebelarm 184 im Abstand von dem Gelenk 188 um eine erste Hebelachse 192 schwenkbar an dem ersten Halteelement 132 sowie zwei an dem Gehäuse 102 angeordneten Flanschen 194 und 196 gelagert, wobei die erste Hebelachse 192 durch einen Lagerbolzen 198 gebildet ist, welcher die Flansche 194 und 196 sowie die Rippen 152 und 154 des ersten Halteelements 132 und außerdem noch den ersten Hebelarm 184 durchsetzt.

Ferner ist der zweite Kniehebelarm 186 im Abstand von dem Gelenk 188 mittels einer zweiten Hebelachse 202 mit dem Betätigungsarm 166 und somit auch mit dem zweiten Halteelement 134 verbunden, wobei die zweite Hebelachse 202 durch einen Lagerzapfen 204 gebildet ist, welcher sowohl Endbereiche des gabelartig ausgebildeten Betätigungsarms 166 als auch den zweiten Kniehebelarm 186 durchsetzt.

Durch Variation des Winkels zwischen dem ersten Kniehebelarm 184 und dem zweiten Kniehebelarm 186 im Bereich des Gelenks 188 besteht somit die Möglichkeit, die Kugelaufnahmefläche 164 in Richtung auf die Kugelaufnahmefläche 112 zu oder von dieser weg zu bewegen, um einerseits die Kupplungskugel 26 aufzunehmen, und insbesondere zu fixieren oder gegebenenfalls freizugeben.

Zur Beaufschlagung des Kniehebelmechanismus 182 dergestalt, dass dieser zwischen den Hebelachsen 192 und 202 in eine gestreckte Stellung übergeht, ist dieser mit einem Druckfederelement 206 versehen, welches die Tendenz hat, die Lagerzapfen 198 und 204 in Richtung voneinander weg zu beaufschlagen und somit stets in Richtung einer gestreckten Stellung des Kniehebelmechanismus 182 wirksam ist.

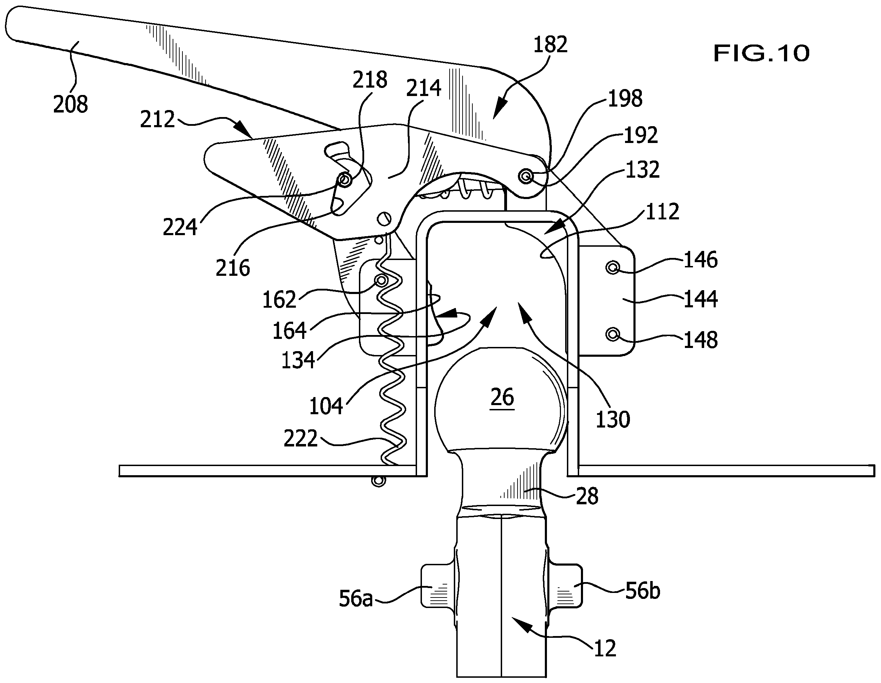

Um dem zweiten, relativ zur Montageeinheit 50, insbesondere relativ zum Gehäuse 102 bewegbaren Halteelement 134 verschiedene Relativpositionen zum ersten Halteelement 132 vorgeben zu können, umfasst die Positioniervorrichtung (180) eine dem Kniehebelmechanismus 182 zugeordnete, als Ganzes mit 212 bezeichnete Kulissenführung, welche einen Kulissenträger 214 sowie eine im Kulissenträger 214 vorgesehene Kulissenbahn 216 umfasst, wobei die Kulissenbahn vorzugsweise als Ausnehmung in dem Kulissenträger 214 realisiert ist (Fig. 10, 12, 14, 16, 18, 20).

Dabei ist der Kulissenträger 214 relativ zur Montageeinheit 50, insbesondere relativ zum Gehäuse 102 derselben, bewegbar gelagert, beispielsweise um die erste Hebelachse 192 schwenkbar gelagert, so dass vorzugsweise der Lagerzapfen 198 auch den Kulissenträger 214 durchsetzt.

Mit der Kulissenbahn 216 wirkt ein Bahnfolger 218 zusammen, welcher auf den Betätigungsarm 166 wirkt und beispielsweise durch ein Ende des Lagerzapfens 204 gebildet ist, so dass mit der Kulissenbahn 216 die Möglichkeit besteht, das zweite Halteelement 134 in definierten Positionen relativ zum ersten Halteelement 132 zu positionieren.

Ferner ist der Kulissenträger 214 noch durch ein Federelement 222 in Richtung einer durch die Kulissenbahn 216 vorgegebenen Haltestellung beaufschlagt, wie nachfolgend im Einzelnen erläutert wird.

Mit der Positioniervorrichtung 180 sind die Halteelemente 132 und 134 relativ zueinander wie folgt bewegbar und positionierbar.

Wie in Fig. 9 und 10 dargestellt, ermöglicht die Positioniervorrichtung 180 die Halteelemente 132 und 134 in eine Bereitschaftsstellung zu bringen, in welcher die Halteelemente 132 und 134 in einem ausreichend großen Abstand zueinander stehen der ein Aufsetzen der Kupplungskugelaufnahme 104 auf die Kupplungskugel 26 ermöglicht.

Die Bereitschaftsstellung wird dadurch definiert, dass der Kniehebelmechanismus 182 durch das Zusammenwirken der Kulissenbahn 216 und des Bahnfolgers 218 in einer Stellung gehalten wird, die nicht der gestreckten Stellung des Kniehebelmechanismus 182 entspricht, sondern einer Stellung, in welcher Verbindungslinien zwischen der ersten Hebelachse 192 und dem Gelenk 188 sowie der zweiten Hebelachse 202 und dem Gelenk 188 einen Winkel kleiner 180° aufweisen.

In dieser Stellung steht auch das zweite Halteelement 134 in einem ausreichend großen Abstand vom ersten Halteelement 132, der beim Aufsetzen der Kupplungskugelaufnahme 104 auf die Kupplungskugel 26 ein Auseinanderbewegen der Halteelemente 132 und 134 dadurch, dass die Halteelemente 132 und 134 an der Kupplungskugel zur Anlage kommen, zulässt und vorzugsweise auch nicht behindert.

Die Bereitschaftsstellung wird dabei definiert durch eine Bahnfolgeraufnahme 224 der Kulissenbahn 216, welche den Abstand des Bahnfolgers 218 von der ersten Hebelachse 192 des Kniehebelmechanismus 182 begrenzt und außerdem durch den Bahnfolger 218 ein Verschwenken des Kulissenträgers 214 in Richtung seiner Haltestellung begrenzt, so dass der Kulissenträger trotz der Einwirkung des Federelements 222 in der Bereitschaftsstellung verbleibt und sich nicht in die Haltestellung bewegt.

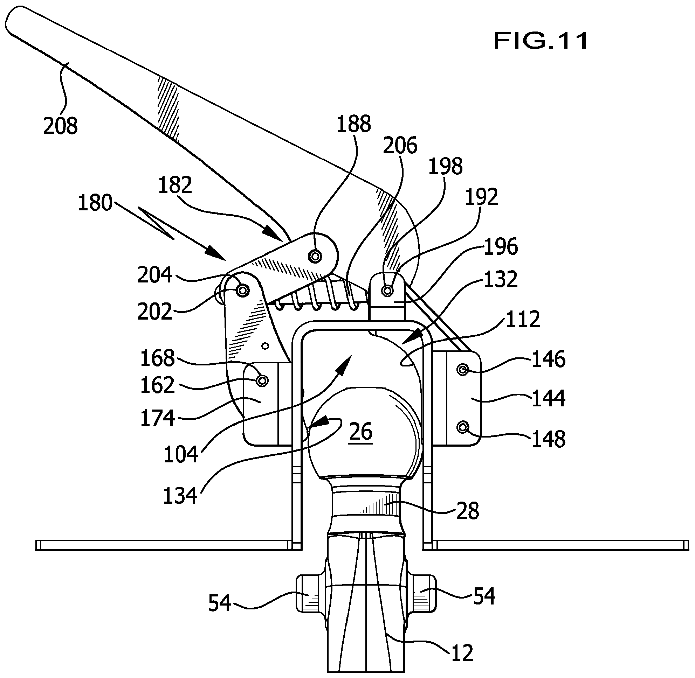

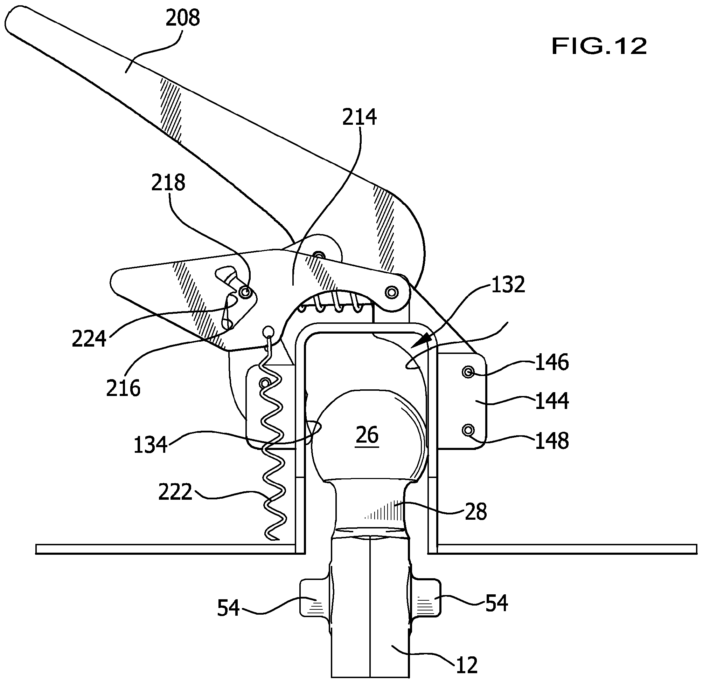

Wird nun in dieser von der Positioniervorrichtung 180 vorgegebenen Bereitschaftsstellung der Halteelemente 132 und 134 die Kupplungskugelaufnahme 104 auf die Kupplungskugel 26 aufgesetzt, so liegt, wie in den Fig. 11 und 12 dargestellt, die Kupplungskugel 26 einerseits an dem ersten Halteelement 132 an und bewegt das zweite Halteelement 134, das an der gegenüberliegenden Seite der Kupplungskugel 26 anliegt, in Richtung von dem ersten Halteelement 132 weg, wodurch der Abstand zwischen dem Bahnfolger 218 und der ersten Hebelachse 192 verringert wird.

Dies führt zu einer Bewegung des Bahnfolgers 218 in der Kulissenbahn 216 dergestalt, dass der Bahnfolger 218 die Bahnfolgeraufnahme 224 der Kulissenbahn 216 verlässt und der Kulissenträger 214 die Möglichkeit hat, sich unter der Wirkung des Federelements 222 in Richtung der Haltestellung zu bewegen, in welcher der Bahnfolger 218 nicht mehr die Möglichkeit hat, wieder in die Bahnfolgeraufnahme 224 einzutreten.

Dies ist in Fig. 12 dargestellt, wobei, wie in Fig. 11 erkennbar, der Winkel zwischen einer Verbindungslinie der zweiten Hebelachse 202 mit dem Gelenk 188 und der ersten Hebelachse 192 mit dem Gelenk 188 kleiner ist als in der Bereitschaftsstellung.

Dies führt dazu, dass die Kulissenführung 212 nicht mehr in der Lage ist, die Bereitschaftsstellung aufrechtzuerhalten, so dass dadurch die Bereitschaftsstellung der Positioniervorrichtung 180 aufgehoben wird.

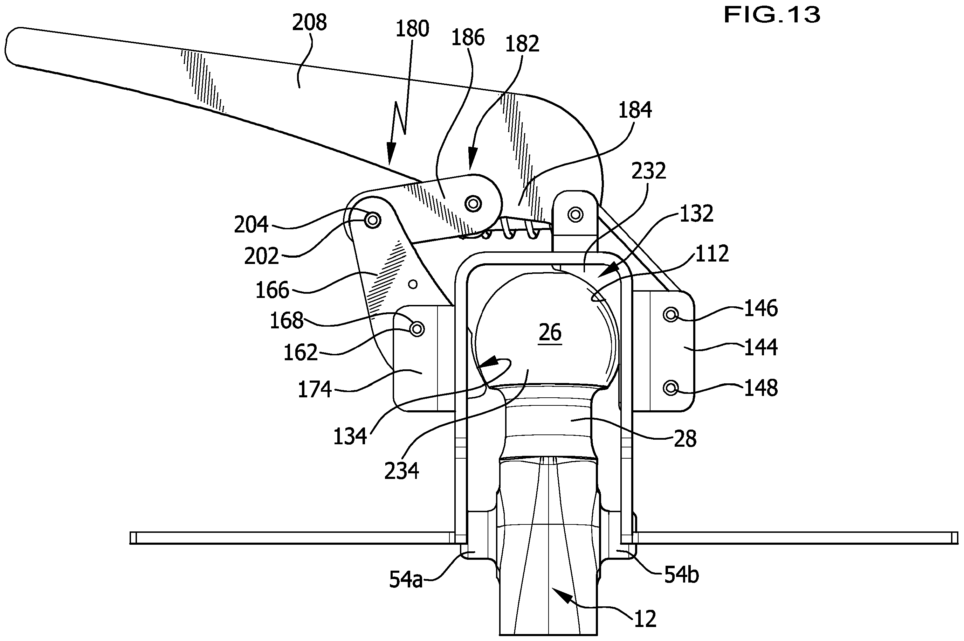

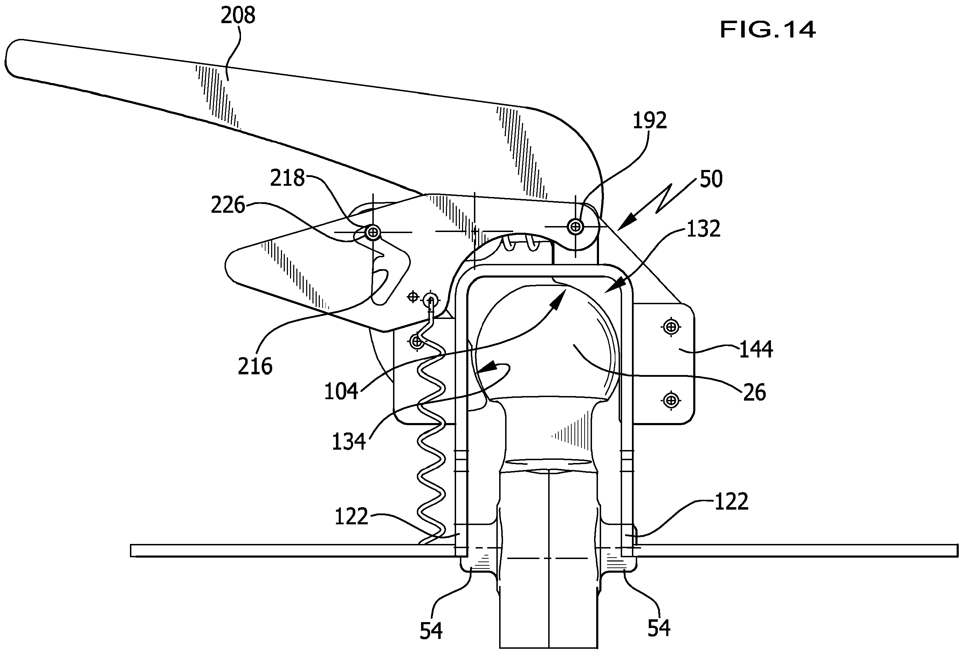

Sitzt nun die Kupplungskugelaufnahme 104 auf der Kupplungskugel 26 auf, wie in den Fig. 13 und 14 dargestellt, so liegt einerseits die Kupplungskugel 26 an der Kugelaufnahmefläche 112 des ersten Halteelements 132 an, insbesondere mit einem Flächenbereich 232 der von der Äquatorebene AQ ausgehend auf einer dem Kugelansatz 28 abgewandten Seite liegt, während das zweite Halteelement 134 an einem Oberflächenbereich 234 der Kupplungskugel 26 anliegt, der ausgehend von einer Äquatorlinie AQ auf einer dem Kugelansatz 28 zugewandten Seite liegt (Fig. 13, 14).

In dieser in Fig. 13 und 14 dargestellten Haltestellung liegen die Halteelemente 132 und 134 jedoch auf der Kupplungskugel 26 gleitend an, so dass die Haltevorrichtung 130 mit den Halteelementen 132, 134 ein Abheben der Kupplungskugelaufnahme 104 von der Kupplungskugel 26 dann verhindert, wenn die Halteelemente 132 und 134 nicht mehr voneinander weg bewegt werden können.

Dies wird von der Kulissenbahn 216 dadurch verhindert, dass der Bahnfolger 218 in einer Bahnfolgeraufnahme 226 liegt (Fig. 14), welche ein Bewegen des Bahnfolgers 218 in Richtung der ersten Hebelachse 192 unterbindet, so dass die Kulissenführung 216 die Haltestellung der Halteelemente 132 und 134 aufrechterhält.

Außerdem sind die Positionierkörperaufnahmen 122 derart an der Montageeinheit 50 angeordnet, dass die Positionierkörper 54 in die Positionierkörperaufnahmen 122 eintauchen und folglich im Zusammenhang mit der Aufnahme der Kupplungskugel 26 durch die Haltevorrichtung 130 die Montageeinheit 50 um die Kupplungskugel 26 weder um horizontale Achsen kippbar noch um vertikale Achsen drehbar ist, da dies durch die in den Positionierkörperaufnahmen 122 angeordneten, vorzugsweise mit den Führungsflächen 86, 88 mit den Positionierkörperaufnahmen zusammenwirkenden Positionierkörper 54 am Kugelhals 12 unterbunden ist.

Damit ist bereits durch das Erreichen der Haltestellung der Halteelemente 132 und 134 und das Fixieren derselben in der Haltestellung der Lastenträger 40 durch die Montageeinheit 50 betriebssicher mit der Kupplungskugel 26 und dem Kugelhals 12 verbunden.

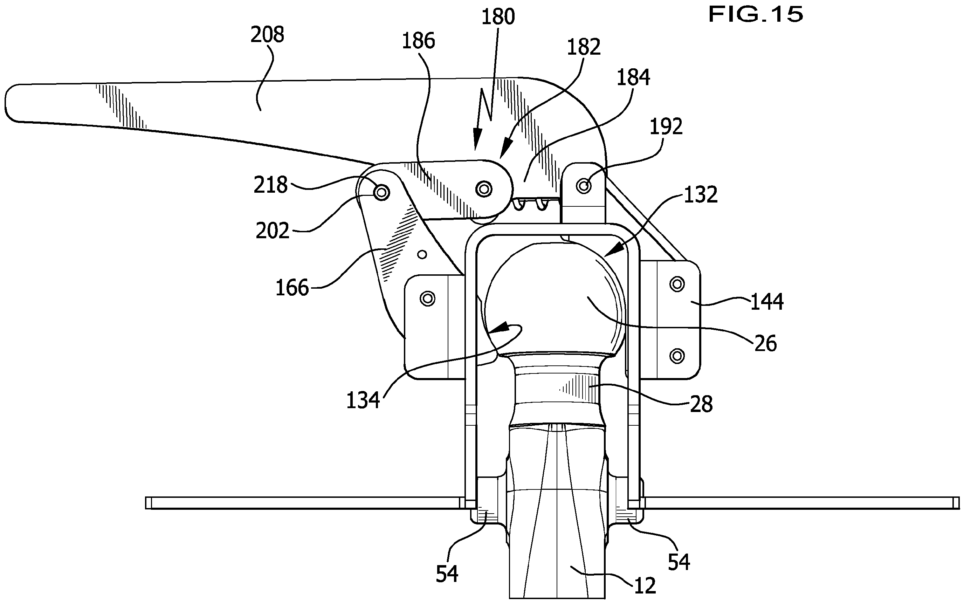

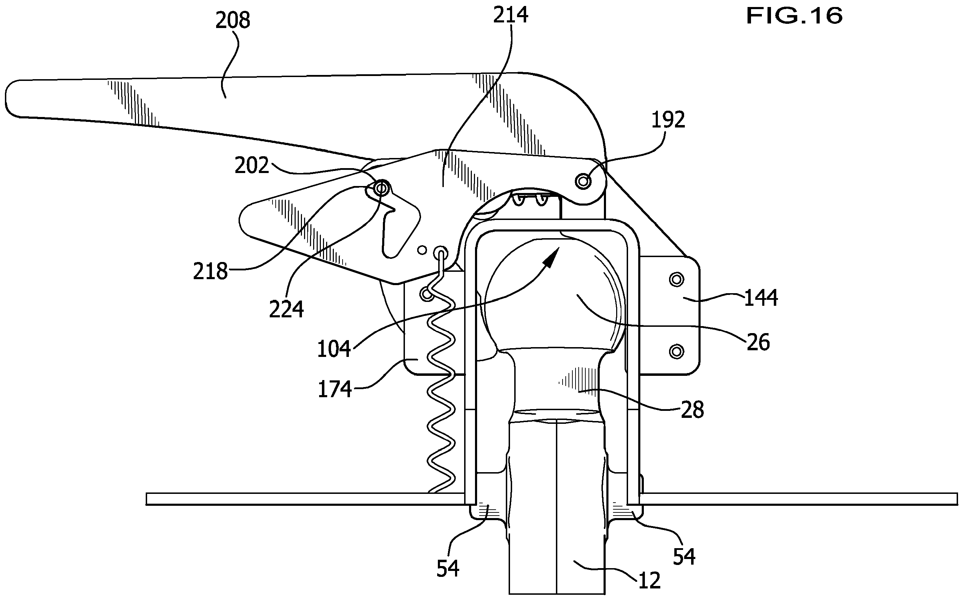

Zusätzlich besteht jedoch die Möglichkeit, wie in den Fig. 15 und 16 dargestellt, den Kniehebelmechanismus 182 in eine Übertotpunktstellung zu bewegen, in welcher die zweite Hebelachse 202 im Wesentlichen einen maximalen Abstand von der ersten Hebelachse 192 aufweist, wobei diese Übertotpunktstellung so gewählt ist, dass in dieser ein kraftschlüssiges Einspannen der Kupplungskugel 26 zwischen den Halteelementen 132 und 134 vorliegt, so dass diese nicht mehr auf der Kugelfläche 38 der Kupplungskugel 26 gleiten können, sondern kraftschlüssig an dieser fixiert sind, so dass auch jegliches Spiel, das vielleicht in der Haltestellung noch bestehen kann, aufgehoben ist.

Beim Übergang von der Haltestellung in die Spannstellung bewegt sich der Bahnfolger 218 geringfügig aus der Bahnfolgeraufnahme 224 heraus, so dass das zweite Halteelement 134 noch zusätzlich geringfügig in Richtung des ersten Halteelements 132 bewegt wird, um diese kraftschlüssige Verbindung mit der Kupplungskugel 26 herzustellen.

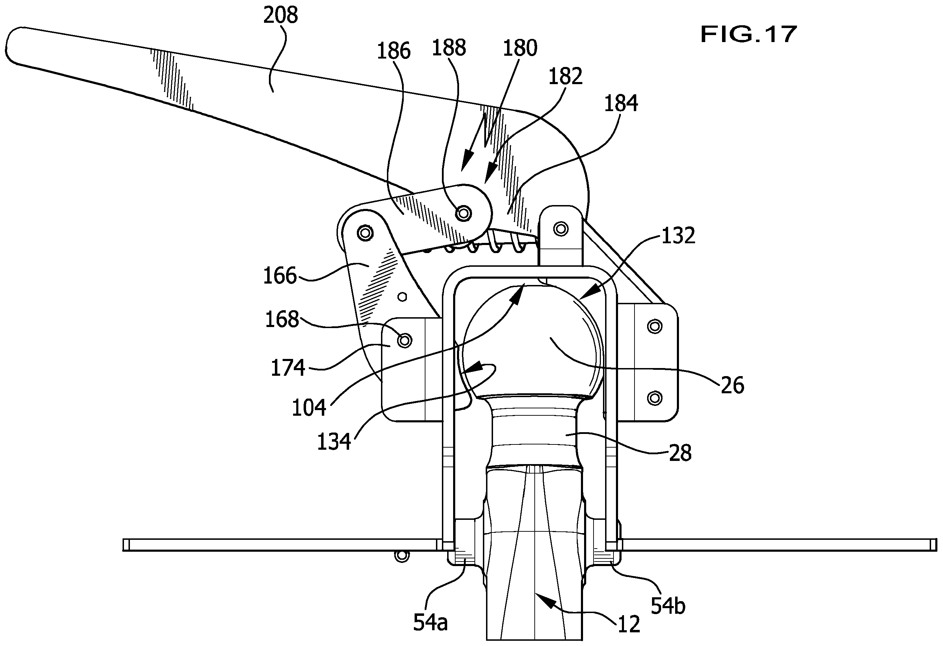

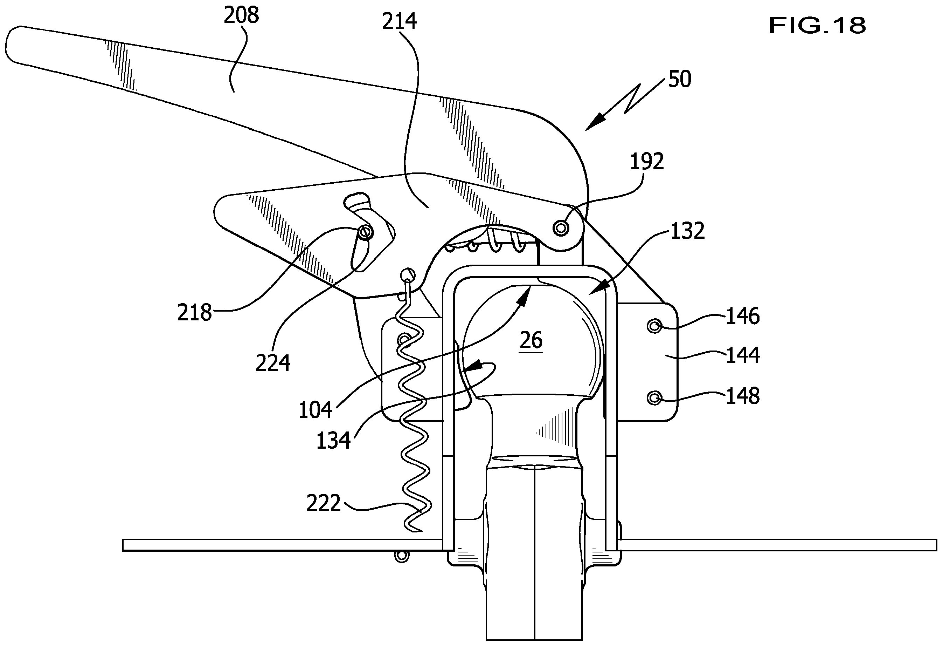

Um die Montageeinheit 50 von der Kupplungskugel 26 abnehmen zu können, ist wie in Fig. 17 und 18 dargestellt, ein Lösen der Spannstellung durch Einwirken auf den Betätigungshebel 208 erforderlich und außerdem erfolgt ein Überführen des Kniehebelmechanismus 182 in die Bereitschaftsstellung, was dadurch erreicht wird, dass der Kulissenträger 214 gegen die Kraftwirkung des Federelements 222 so weit verschwenkt wird, dass der Bahnfolger 218 wiederum in die Bahnfolgeraufnahme 224 eingreifen kann.

In diesem Zustand ist das zweite Halteelement 134 geringfügig von der Oberfläche der Kupplungskugel 26 abgehoben, wenn diese auf der Gegenüberliegenden Seite noch an dem ersten Halteelement 132 anliegt.

In dieser Stellung lässt sich die Montageeinheit 50 mit der Kupplungskugelaufnahme 104 abheben, wobei beim Abheben ebenfalls wiederum die Halteelemente 132 und 134 längs der Kugelfläche 38 der Kupplungskugel 26 gleiten und somit ein Verschwenken des Bahnfolgers 218 in Richtung der ersten Hebelachse 192 erfolgt, wodurch der Kulissenträger 214 mit der Kulissenbahn 216 wiederum so weit verschwenkt wird, dass in der abgehobenen Stellung der Bahnfolger 218 wieder in die Haltestellung übergeht, aus welcher dieser dann vor einem erneuten Aufsetzen der Montageeinheit 50 auf die Kupplungskugel 26 wiederum in die Bereitschaftsstellung zu überführen ist.

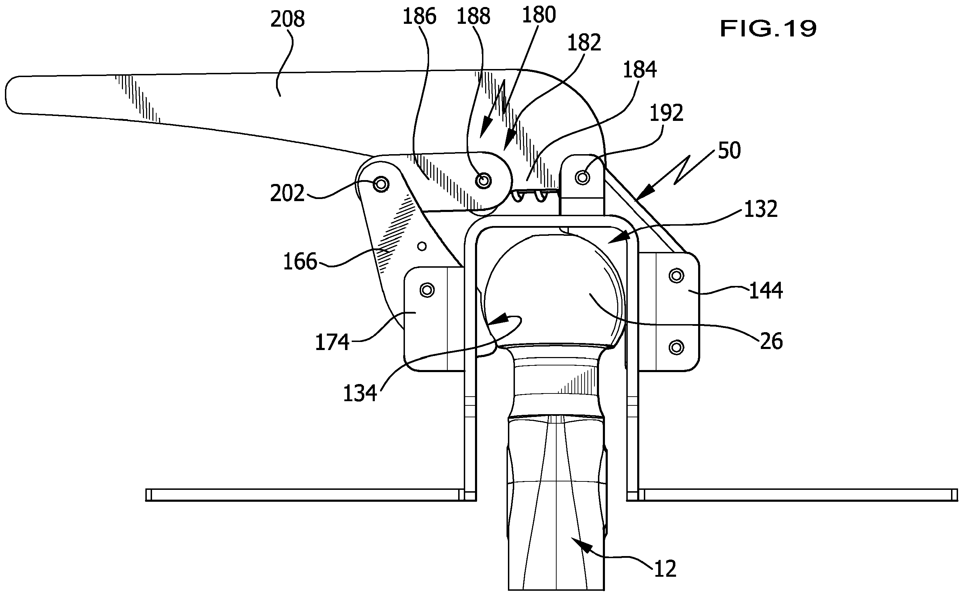

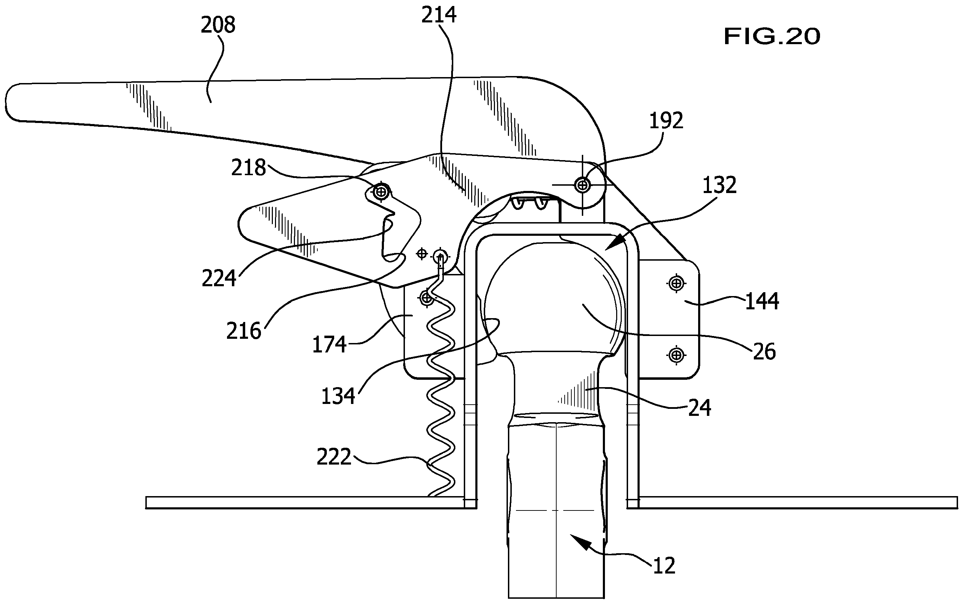

Die erfindungsgemäße Montageeinheit lässt sich jedoch nicht nur bei Anhängekupplungen einsetzen, wie am Kugelhals 12 die beschriebenen Positionierkörper 54 aufweisen, sondern auch bei Anhängekupplungen ohne derartige Positionierkörper 54, da die Möglichkeit besteht, wie in Fig. 19 und 20 dargestellt, die Haltevorrichtung 130 mit den Halteelementen 132 und 134 in die Spannstellung zu überführen, in welcher ein derartiger stabiler Kraftschluss zwischen den Halteelementen 132 und 134 mit der Kugelfläche 38 Kupplungskugel 26 besteht, dass die Montageeinheit 50 durch die in der Spannstellung stehenden Halteelemente 132 und 134 aufgrund des Kraftschlusses kippsicher an der Kupplungskugel 26 gehalten ist.

## Patentansprüche

1. Lastenträger (40) für einen Kugelhals (12) und eine von dem Kugelhals (12) getragene Kupplungskugel (26) aufweisende Anhängekupplungen (10) für Kraftfahrzeuge, umfassend eine Montageeinheit (50), die eine auf die Kupplungskugel (26) aufsetzbare Kupplungskugelaufnahme (104) und eine der Kupplungskugelaufnahme (104) zugeordnete Haltevorrichtung (130) aufweist, welche bei auf die Kupplungskugel (26) aufgesetzter und somit in einer Fixierposition stehender Kupplungskugelaufnahme (104) die Kupplungskugelaufnahme (104) mit der Kupplungskugel (26) verbindet, und mindestens eine mit der Montageeinheit (50) verbundene Positionierkörperaufnahme (122), welche bei auf die Kupplungskugel (26) aufgesetzter Kupplungskugelaufnahme (104) zur kippsicheren und Kippmomente aufnehmenden Abstützung der Montageeinheit (50) an dem Kugelhals (12) mit mindestens einem am Kugelhals (10) fest angeordneten Positionierkörper (54) in Wirkverbindung bringbar ist,
**dadurc hgekennzeichnet**, dass die Haltevorrichtung (130) in eine Spannstellung überführbar ist, in welcher die Kupplungskugelaufnahme (104) mit der Haltevorrichtung (130) an der Kupplungskugel (26) derart kraftschlüssig festgelegt ist, dass die Montageeinheit (50) den Lastenträger (40) auch bei Anhängekupplungen ohne Positionierkörper (54) allein durch den Kraftschluss an der Kupplungskugel (26) kippfrei fixiert.

2. Lastenträger nach Anspruch 1, **dadurch gekennzeichnet, dass** die Haltevorrichtung (130) so ausgebildet ist, dass diese beim Aufsetzen der Kupplungskugelaufnahme (104) auf die Kupplungskugel (26) selbsttätig in eine Haltestellung übergeht, in welcher die Kupplungskugelaufnahme (104) unlösbar, jedoch verkippbar mit der Kupplungskugel (26) verbunden ist.

3. Lastenträger nach Anspruch 1 oder 2, **dadurch gekennzeichnet, dass** die Haltevorrichtung (130) mindestens ein erstes Halteelement (132) und ein zweites Halteelement (134) umfasst, und dass die Halteelemente (132, 134) beim Aufsetzen der Kupplungskugelaufnahme (104) auf die Kupplungskugel (26) die Kupplungskugel (26) zwischen sich aufnehmen und sich dabei an der Kupplungskugel (26) anlegen, dass insbesondere die Halteelemente (132, 134) in der Haltestellung der Haltevorrichtung (130) die Kupplungskugel (26) zwischen sich aufnehmen und auf dieser gleitend anliegen und dass insbesondere die Halteelemente (132, 134) in der Spannstellung der Haltevorrichtung (130) die Kupplungskugel (26) zwischen sich aufnehmen und zwischen sich kraftschlüssig einspannen.

4. Lastenträger nach einem der voranstehenden Ansprüche, **dadurch gekennzeichnet, dass** die Haltevorrichtung (130) eine mit den Halteelementen (132, 134) zusammenwirkende Positioniervorrichtung (180) aufweist, mittels welcher die Halteelemente (132, 134) in der jeweiligen Stellung relativ zueinander positionierbar und fixierbar sind.

5. Lastenträger nach Anspruch 4, **dadurch gekennzeichnet, dass** insbesondere die Positioniervorrichtung (180) so ausgebildet ist, dass die Halteelemente (132, 134) mit dieser vor dem Aufsetzen der Kupplungskugelaufnahme (104) in eine Bereitschaftsstellung positionierbar sind, dass insbesondere durch das Anlegen der Halteelemente (132, 134) an der Kupplungskugel (26) beim Aufsetzen der Kupplungskugelaufnahme (104) auf die Kupplungskugel (26) ein Aufheben der Bereitschaftsstellung erfolgt, dass insbesondere das Aufheben der Bereitschaftsstellung dadurch erfolgt, dass die Halteelemente (132, 134) bei Kontakt mit der Kupplungskugel (26) von einander weg bewegt werden, dass insbesondere die Positioniervorrichtung (180) so ausgebildet ist, durch das Aufheben der Bereitschaftsstellung beim Aufsetzen der Kupplungskugelaufnahme (104) auf die Kupplungskugel (26) die Positioniervorrichtung in der auf die Kupplungskugel (26) aufgesetzten Stellung der Kupplungskugelaufnahme (104) die Halteelemente (132, 134) in die Haltestellung überführen und in dieser fixieren kann, dass insbesondere die Positioniervorrichtung (180) die Halteelemente (132, 134) selbsttätig in die Haltestellung überführt und selbsttätig in dieser hält.

6. Lastenträger nach Anspruch 4 oder 5, **dadurch gekennzeichnet, dass** mit der Positioniervorrichtung (180) die Halteelemente (132, 134) in die die Kupplungskugel (26) kraftschlüssig festlegende Spannstellung überführbar sind, dass insbesondere die Positioniervorrichtung so ausgebildet ist, dass die Halteelemente (132, 134) von der Haltestellung ausgehend in die Spannstellung überführbar sind, dass insbesondere die Positioniervorrichtung (180) so ausgebildet ist, dass die Halteelemente (132, 134) durch manuelle Einwirkung auf ein Betätigungselement (208) der Positioniervorrichtung (180) von der Haltestellung ausgehend in die Spannstellung überführt werden.

7. Lastenträger nach einem der voranstehenden Ansprüche 4 bis 6, **dadurch gekennzeichnet, dass** die Positioniervorrichtung (180) zur Bewegung der Halteelemente (132, 134) in die jeweiligen Stellungen relativ zueinander mit einem Kniehebelmechanismus (182) versehen ist, dass insbesondere der Kniehebelmechanismus (182) in einer ersten Knickstellung die Halteelemente (132, 134) in der Bereitschaftsstellung hält und dass der Kniehebelmechanismus in einer zweiten Knickstellung die Halteelemente (132, 134) in der Haltestellung hält, dass insbesondere der Kniehebelmechanismus (182) in der zweiten Knickstellung einen kleineren Knickwinkel aufweist als in der ersten Knickstellung, und/oder dass insbesondere der Kniehebelmechanismus (182) in eine Übertotpunktstellung bewegbar ist, in welcher dieser die Halteelemente (132, 134) in der Spannstellung hält.

8. Lastenträger nach Anspruch 7, **dadurch gekennzeichnet, dass** der Kniehebelmechanismus (182) durch ein federelastisches Element ständig in Richtung einer Bewegung der Halteelemente (132, 134) in die Haltestellung beaufschlagt ist.

9. Lastenträger nach Anspruch 7 oder 8, **dadurch gekennzeichnet, dass** die Positioniereinrichtung (180) eine dem Kniehebelmechanismus (182) zugeordnete Kulissenführung (212) umfasst, die in der Lage ist, den Kniehebelmechanismus (182) in der Bereitschaftsstellung und in der Haltestellung zu halten.

10. Lastenträger nach Anspruch 9, **dadurch gekennzeichnet, dass** die Kulissenführung (212) einen eine Kulissenbahn (216) tragenden Kulissenträger (214) aufweist, und dass die Kulissenbahn (216) mit einem mit dem Kniehebelmechanismus (182) gekoppelten Bahnfolger (218) zusammen wirkt, dass insbesondere der Kulissenträger (214) an einem Träger (102) für Halteelemente (132, 134) bewegbar angeordnet ist.

11. Lastenträger nach Anspruch 10, **dadurch gekennzeichnet, dass** der Kulissenträger (214) durch ein federelastisches Element (222) in Richtung einer die Halteelemente (132, 134) mit dem Kniehebelmechanismus (182) in der Haltestellung fixierenden Stellung beaufschlagt ist, dass insbesondere der Kulissenträger (214) durch manuelle Einwirkung gegen die Kraftwirkung des federelastischen Elements (222) in eine die Halteelemente (132, 134) mit dem Kniehebelmechanismus (182) in der Bereitschaftsstellung haltende Stellung überführbar ist.

12. Lastenträger nach einem der Ansprüche 9 bis 11, **dadurch gekennzeichnet, dass** die Kulissenbahn (216) so ausgebildet ist, dass sie sowohl für die Bereitschaftsstellung als auch für die Haltestellung Bahnfolgeraufnahmen (224, 226) aufweist, in welchen die Kulissenbahn (216) eine selbsttätige Bewegung des Bahnfolgers (218) in eine andere Stellung verhindert, dass insbesondere die Bahnfolgeraufnahmen (224, 226) so ausgebildet sind, dass in der Bereitschaftsstellung ein Auseinanderbewegen der Halteelemente (132, 134) dazu führt, dass der Bahnfolger (218) die Bahnfolgeraufnahme (224) für die Bereitschaftsstellung verlässt.

13. Lastenträger nach Anspruch 12, **dadurch gekennzeichnet, dass** die Bahnfolgeraufnahme (226) für die Haltestellung so ausgebildet ist, dass sie den Bahnfolger (218) daran hindert, die Haltestellung zu verlassen.

14. Lastenträger nach Anspruch 12 oder 13, **dadurch gekennzeichnet, dass** die Bahnfolgeraufnahme (226) in der Haltestellung so ausgebildet ist, dass sie es zulässt, dass der Bahnfolger (218) die Haltestellung verlässt und zwar in Richtung der Spannstellung, in welcher die Halteelemente (132, 134) die Kupplungskugel mit der erforderlichen Spannkraft beaufschlagen.

15. Lastenträger nach einem der voranstehenden Ansprüche, **dadurch gekennzeichnet, dass** die Montageeinheit (50) zwei Positionierkörperaufnahmen (122) aufweist, die aufeinander gegenüberliegenden Seiten der Kupplungskugelaufnahme (104) angeordnet sind, dass insbesondere die Positionierkörperaufnahmen mit Positionierkörpern (54) zusammen wirken, die auf einander gegenüberliegenden Seiten des Kugelhalses (12) angeordnet sind, dass insbesondere die Positionierkörperaufnahmen (122) so angeordnet sind, dass sie außerhalb der Kupplungskugelaufnahme (104) liegen, dass insbesondere die Positionierkörperaufnahmen (122) so ausgebildet sind, dass sie die Positionierkörper (54) so weit aufnehmen, dass die Positionierkörperaufnahmen (122) auf einander gegenüberliegenden Seiten des jeweiligen Positionierkörpers (54) anliegen, und/oder dass insbesondere die Positionierkörperaufnahmen (122) auch an den Positionierkörpern (54) auf deren dem Kugelhals (12) abgewandten Stirnseiten anliegen, und/oder dass insbesondere Positionierkörperaufnahmen (122) so ausgebildet sind, dass sie eine umgekehrt U-förmige Kontur aufweisen, mit welcher diese beim Aufsetzen der Montageeinheit (50) auf die Anhängekupplung (10) die Positionierkörper (54) auf einander gegenüberliegenden Seiten übergreifen und dabei an den Positionierflächen (64, 66) der Positionierkörper (54), die quer zu einer Längsmittelebene (30) des Kugelhalses (12) verlaufen, anliegen.

## Claims

1. Load bearer (40) for trailer couplings (10) for motor vehicles, said trailer couplings having a ball neck (12) and a coupling ball (26) carried by the ball neck (12), said load bearer comprising an assembly unit (50) which has a coupling ball receptacle (104) which is placeable on the coupling ball (26) and a holding device (130) associated with the coupling ball receptacle (104), which holding device connects the coupling ball receptacle (104) to the coupling ball (26) when the coupling ball receptacle (104) is placed on the coupling ball (26) and is thus in a fixing position, and connected to the assembly unit (50), at least one positioning body receptacle (122) which when the coupling ball receptacle (104) is placed onto the coupling ball (26) is bringable into operative connection with at least one positioning body (54) firmly arranged on the ball neck (10) for tiltproof and tilting-torque-absorbing support of the assembly unit (50) on the ball neck (12), **characterised in that** the holding device (130) is transferrable into a clamping position in which the coupling ball receptacle (104) with the holding device (130) is fixed in a force-locking manner on the coupling ball (26) such that the assembly unit (50) fixes the load bearer (40) in a tiltproof manner solely by means of the force-locking on the coupling ball (26), even in trailer couplings without positioning bodies (54).

2. Load bearer according to claim 1, **characterised in that** the holding device (130) is configured so that, on placement of the coupling ball receptacle (104) on the coupling ball (26), said holding device automatically transfers into a holding position in which the coupling ball receptacle (104) is non-releasably but tiltably connected to the coupling ball (26).

3. Load bearer according to claim 1 or 2, **characterised in that** the holding device (130) comprises at least one first holding element (132) and one second holding element (134) and **in that**, when the coupling ball receptacle (104) is placed on the coupling ball (26), the holding elements (132, 134) receive the coupling ball (26) between them and thereby come to lie against the coupling ball (26), **in that**, in particular, in the holding position of the holding device (130), the holding elements (132, 134) receive the coupling ball (26) between them and abut it slidingly, and **in that**, in particular, in the clamping position of the holding device (130), the holding elements (132, 134) receive the coupling ball (26) between them and clamp it force-lockingly between them.

4. Load bearer according to one of the preceding claims, **characterised in that** the holding device (130) has a positioning device (180) which cooperates with the holding elements (132, 134), by means of which positioning device the holding elements (132, 134) are positionable and fixable relative to one another in the respective position.

5. Load bearer according to claim 4, **characterised in that**, in particular, the positioning device (180) is configured so that the holding elements (132, 134) are positionable by it before the placement of the coupling ball receptacle (104) into a readiness position, **in that**, in particular, by means of the holding elements (132, 134) coming to lie against the coupling ball (26) when the coupling ball receptacle (104) is placed onto the coupling ball (26), a cancelling of the readiness position takes place, **in that**, in particular, the cancelling of the readiness position takes place in that the holding elements (132, 134) are moved away from one another on contact with the coupling ball (26), **in that**, in particular, the positioning device (180) is configured so that by means of the cancelling of the readiness position when the coupling ball receptacle (104) is placed on the coupling ball (26), in the position of the coupling ball receptacle (104) placed on the coupling ball (26), the positioning device can transfer the holding elements (132, 134) into the holding position and fix them in said position, **in that**, in particular, the positioning device (180) automatically transfers the holding elements (132, 134) into the holding position and automatically holds them in said position.

6. Load bearer according to claim 4 or 5, **characterised in that** with the positioning device (180), the holding elements (132, 134) are transferrable into the clamping position force-lockingly fixing the coupling ball (26), **in that**, in particular, the positioning device is configured so that the holding elements (132, 134) are transferrable, starting from the holding position, into the clamping position, **in that**, in particular, the positioning device (180) is configured so that the holding elements (132, 134) are transferred by manual action upon an actuating element (208) of the positioning device (180), starting from the holding position, into the clamping position.

7. Load bearer according to one of the preceding claims 4 to 6, **characterised in that** the positioning device (180) is provided for moving the holding elements (132, 134) into the respective positions relative to one another with a toggle mechanism (182), **in that**, in particular, in a first bending position, the toggle mechanism (182) holds the holding elements (132, 134) in the readiness position and **in that**, in a second bending position, the toggle mechanism holds the holding elements (132, 134) in the holding position, **in that**, in particular, in the second bending position, the toggle mechanism (182) has a smaller bending angle than in the first bending position and/or **in that**, in particular, the toggle mechanism (182) is movable into an over-centre position in which it holds the holding elements (132, 134) in the clamping position.

8. Load bearer according to claim 7, **characterised in that** the toggle mechanism (182) is constantly urged by an elastic element in the direction of a movement of the holding elements (132, 134) into the holding position.

9. Load bearer according to claim 7 or 8, **characterised in that** the positioning device (180) comprises a slotted link guide (212) associated with the toggle mechanism (182), said slotted link guide being capable of holding the toggle mechanism (182) in the readiness position and in the holding position.

10. Load bearer according to claim 9, **characterised in that** the slotted link guide (212) has a slotted link carrier (214) which carries a slotted link path (216), and **in that** the slotted link path (216) cooperates with a path follower (218) coupled to the toggle mechanism (182), **in that**, in particular, the slotted link carrier (214) is movably arranged on a carrier (102) for holding elements (132, 134).

11. Load bearer according to claim 10, **characterised in that** the slotted link carrier (214) is urged by an elastic element (222) in the direction of a position fixing the holding elements (132, 134) with the toggle mechanism (182) in the holding position, **in that**, in particular, the slotted link carrier (214) is transferrable by manual intervention against the force effect of the elastic element (222) into a position holding the holding elements (132, 134) with the toggle mechanism (182) in the readiness position.

12. Load bearer according to one of the claims 9 to 11, **characterised in that** the slotted link path (216) is configured so that it has path follower receptacles (224, 226) both for the readiness position and also for the holding position, in which the slotted link path (216) prevents an autonomous movement of the path follower (218) into a different position, **in that**, in particular, the path follower receptacles (224, 226) are configured so that in the readiness position, a movement of the holding elements (132, 134) apart leads thereto that the path follower (218) leaves the path follower receptacle (224) for the readiness position.

13. Load bearer according to claim 12, **characterised in that** the path follower receptacle (226) for the holding position is configured so that it prevents the path follower (218) from leaving the holding position.

14. Load bearer according to claim 12 or 13, **characterised in that** the path follower receptacle (226) is configured in the holding position so that it permits the path follower (218) to leave the holding position, specifically in the direction of the clamping position in which the holding elements (132, 134) act upon the coupling ball with the required clamping force.

15. Load bearer according to one of the preceding claims, **characterised in that** the assembly unit (50) has two positioning body receptacles (122) which are arranged on mutually opposite sides of the coupling ball receptacle (104), **in that**, in particular, the positioning body receptacles cooperate with positioning bodies (54) which are arranged on mutually opposite sides of the ball neck (12), **in that**, in particular, the positioning body receptacles (122) are arranged so that they lie outside the coupling ball receptacle (104), **in that**, in particular, the positioning body receptacles (122) are configured so that they receive the positioning bodies (54) so far that the positioning body receptacles (122) abut mutually opposite sides of the respective positioning body (54), and/or in that, in particular, the positioning body receptacles (122) also abut the positioning bodies (54) on their end faces facing away from the ball neck (12), and/or **in that**, in particular, positioning body receptacles (122) are configured so that they have an inverted U-shaped contour with which they grip the positioning bodies (54) on mutually opposite sides when the assembly unit (50) is placed onto the trailer coupling (10) and thereby said positioning body receptacles abut the positioning faces (64, 66) of the positioning bodies (54) which extend transversely to a longitudinal central plane (30) of the ball neck (12).

## Revendications

1. Porte-charge (40) pour un col porte-boule (12) et des attelages de remorque (10) pour véhicules à moteur présentant une boule d'attelage (26) portée par le col porte-boule (12), comprenant une unité de montage (50), qui présente un logement de boule d'attelage (104) pouvant être posé sur la boule d'attelage (26) et un dispositif de retenue (130), qui est associé au logement de boule d'attelage (104) et qui, lorsque le logement de boule d'attelage (104) est posé sur la boule d'attelage (26) et se tient ainsi dans une position de fixation, relie le logement de boule d'attelage (104) à la boule d'attelage (26), et au moins un logement de corps de positionnement (122), qui est relié à l'unité de montage (50) et qui, lorsque le logement de boule d'attelage (104) est posé sur la boule d'attelage (26), peut être amené en liaison fonctionnelle avec au moins un corps de positionnement (54) disposé fixement sur le col porte-boule (12) pour l'appui, stable et absorbant des couples de basculement, de l'unité de montage (50) sur le col porte-boule (12), **caractérisé en ce que** le dispositif de retenue (130) peut être amené dans une position de serrage, dans laquelle le logement de boule d'attelage (104) est immobilisé à force avec le dispositif de retenue (130) sur la boule d'attelage (26), de telle sorte que l'unité de montage (50) ne fixe le porte-charge (40) sur la boule d'attelage (26) sans basculement que par la liaison à force y compris pour les attelages de remorque sans corps de positionnement (54).

2. Porte-charge selon la revendication 1, **caractérisé en ce que** le dispositif de retenue (130) est réalisé de sorte que celui-ci, lors de la pose du logement de boule d'attelage (104) sur la boule d'attelage (26), passe automatiquement dans une position de retenue, dans laquelle le logement de boule d'attelage (104) est relié à la boule d'attelage (26) de manière imperdable, mais avec possibilité de basculement.

3. Porte-charge selon la revendication 1 ou 2, **caractérisé en ce que** le dispositif de retenue (130) comprend au moins un premier élément de retenue (132) et un deuxième élément de retenue (134), et que les éléments de retenue (132, 134), lors de la pose du logement de boule d'attelage (104) sur la boule d'attelage (26), reçoivent entre eux la boule d'attelage (26) et se placent ce faisant sur la boule d'attelage (26), que notamment les éléments de retenue (132, 134) dans la position de retenue du dispositif de retenue (130) reçoivent entre eux la boule d'attelage (26) et s'appliquent de manière à glisser sur celle-ci et que notamment les éléments de retenue (132, 134) dans la position de serrage du dispositif de retenue (130) reçoivent entre eux la boule d'attelage (26) et la serrent entre eux à force.

4. Porte-charge selon l'une des revendications précédentes, **caractérisé en ce que** le dispositif de retenue (130) présente un dispositif de positionnement (180), qui coopère avec les éléments de retenue (132, 134) et au moyen duquel les éléments de retenue (132, 134) peuvent être positionnés les uns par rapport aux autres et peuvent être fixés dans la position respective.

5. Porte-charge selon la revendication 4, **caractérisé en ce que** notamment le dispositif de positionnement (180) est réalisé de sorte que les éléments de retenue (132, 134) peuvent être positionnés avec celui-ci dans une position d'attente avant la pose du logement de boule d'attelage (104), que notamment du fait du placement des éléments de retenue (132, 134) sur la boule d'attelage (26) lors de la pose du logement de boule d'attelage (104) sur la boule d'attelage (26), une levée de la position d'attente s'effectue, que notamment la levée de la position d'attente s'effectue par le fait que les éléments de retenue (132, 134), lors d'un contact avec la boule d'attelage (26), sont éloignés l'un de l'autre, que notamment le dispositif de positionnement (180) est réalisé de sorte que du fait de la levée de la position d'attente lors de la pose du logement de boule d'attelage (104) sur la boule d'attelage (26), le dispositif de positionnement dans la position du logement de boule d'attelage (104) posé sur la boule d'attelage (26) peut amener les éléments de retenue (132, 134) dans la position de retenue et les fixer dans celle-ci, que notamment le dispositif de positionnement (180) amène les éléments de retenue (132, 134) automatiquement dans la position de retenue et les maintient automatiquement dans celle-ci.

6. Porte-charge selon la revendication 4 ou 5, **caractérisé en ce qu'**avec le dispositif de positionnement (180) les éléments de retenue (132, 134) peuvent être amenés dans la position de serrage immobilisant à force la boule d'attelage (26), que notamment le dispositif de positionnement est réalisé de sorte que les éléments de retenue (132, 134) peuvent être amenés à partir de la position de retenue dans la position de serrage, que notamment le dispositif de positionnement (180) est réalisé de sorte que les éléments de retenue (132, 134) sont amenés par action manuelle sur un élément d'actionnement (208) du dispositif de positionnement (180) à partir de la position de retenue dans la position de serrage.

7. Porte-charge selon l'une des revendications 4 à 6, **caractérisé en ce que** le dispositif de positionnement (180) est pourvu d'un mécanisme à genouillère (182) pour le déplacement des éléments de retenue (132, 134) dans les positions respectives l'un par rapport l'autre, que notamment le mécanisme à genouillère (182) dans une première position d'inflexion maintient les éléments de retenue (132, 134) dans la position d'attente et que le mécanisme à genouillère dans une deuxième position d'inflexion maintient les éléments de retenue (132, 134) dans la position de retenue, que notamment le mécanisme à genouillère (182) présente dans la deuxième position d'inflexion un angle d'inflexion plus petit que dans la première position d'inflexion, et/ou que notamment le mécanisme à genouillère (182) peut être déplacé dans une position de détente brusque, dans laquelle celui-ci maintient les éléments de retenue (132, 134) dans la position de serrage.

8. Porte-charge selon la revendication 7, **caractérisé en ce que** le mécanisme à genouillère (182) est sollicité par un élément élastique de ressort de manière permanente en direction d'un mouvement des éléments de retenue (132, 134) dans la position de retenue.

9. Porte-charge selon la revendication 7 ou 8, **caractérisé en ce que** le dispositif de positionnement (180) comprend un guide à coulisse (212), qui est associé au mécanisme à genouillère (182) et qui est en mesure de maintenir le mécanisme à genouillère (182) dans la position d'attente et dans la position de retenue.

10. Porte-charge selon la revendication 9, **caractérisé en ce que** le guide à coulisse (212) présente un porte-coulisse (214) portant une voie de coulisse (216), et que la voie de coulisse (216) coopère avec un suiveur de voie (218) accouplé au mécanisme à genouillère (182), que notamment le porte-coulisse (214) est disposé de manière mobile sur un support (102) pour des éléments de retenue (132, 134).

11. Porte-charge selon la revendication 10, **caractérisé en ce que** le porte-coulisse (214) est sollicité par un élément élastique (222) de ressort en direction d'une position fixant les éléments de retenue (132, 134) avec le mécanisme à genouillère (182) dans la position de retenue, que notamment le porte-coulisse (214) peut être amené par action manuelle à l'encontre de l'action de force de l'élément élastique (222) de ressort dans une position maintenant les éléments de retenue (132, 134) avec le mécanisme à genouillère (182) dans la position d'attente.

12. Porte-charge selon l'une des revendications 9 à 11, **caractérisé en ce que** la voie de coulisse (216) est réalisée de sorte qu'elle présente aussi bien pour la position d'attente que pour la position de retenue des logements de suiveur de voie (224, 226), dans lesquels la voie de coulisse (216) empêche un mouvement automatique du suiveur de voie (218) dans une autre position, que notamment les logements de suiveur de voie (224, 226) sont réalisés de sorte que dans la position d'attente, un mouvement d'écartement des éléments de retenue (132, 134) a pour effet que le suiveur de voie (218) quitte le logement de suiveur de voie (224) pour la position d'attente.

13. Porte-charge selon la revendication 12, **caractérisé en ce que** le logement de suiveur de voie (226) pour la position de retenue est réalisé de sorte qu'il empêche le suiveur de voie (218) de quitter la position de retenue.

14. Porte-charge selon la revendication 12 ou 13, **caractérisé en ce que** le logement de suiveur de voie (226) est réalisé dans la position de retenue de sorte qu'il permet que le suiveur de voie (218) quitte la position de retenue et ce en direction de la position de serrage, dans laquelle les éléments de retenue (132, 134) sollicitent la boule d'attelage avec la force de serrage nécessaire.

15. Porte-charge selon l'une des revendications précédentes, **caractérisé en ce que** l'unité de montage (50) présente deux logements de corps de positionnement (122), qui sont disposés sur les faces opposées l'une à l'autre du logement de boule d'attelage (104), que notamment les logements de corps de positionnement coopèrent avec des corps de positionnement (54), qui sont disposés sur des faces opposées l'une à l'autre du col porte-boule (12), que notamment les logements de corps de positionnement (122) sont disposés de sorte qu'ils se situent à l'extérieur du logement de boule d'attelage (104), que notamment les logements de corps de positionnement (122) sont réalisés de sorte qu'ils reçoivent les corps de positionnement (54) à un point tel que les logements de corps de positionnement (122) s'appliquent sur des faces opposées l'une à l'autre du corps de positionnement (54) respectif, et/ou que notamment les logements de corps de positionnement (122) s'appliquent également sur les corps de positionnement (54) sur les faces frontales de ceux-ci éloignées du col porte-boule (12), et/ou que notamment les logements de corps de positionnement (122) sont réalisés de sorte qu'ils présentent un contour en forme de U inversé, avec lequel ceux-ci lors de la pose de l'unité de montage (50) sur l'attelage de remorque (10) dépassent du corps de positionnement (54) sur des faces opposées l'une à l'autre et ce faisant s'appliquent sur les surfaces de positionnement (64, 66) des corps de positionnement (54), qui s'étendent transversalement par rapport à un plan médian longitudinal (30) du col porte-boule (12).
